# EUROPEAN PATENT SPECIFICATION

(11) **EP 0 864 396 B1**
(45) Date of publication and mention of the grant of the patent: **07.06.2006**
(21) Application number: 98104159.3
(22) Date of filing: 09.03.1998
(51) Int. Cl.: B23P 19/00, B23Q 7/14, B23P 19/06

(54) **Supply system for the delivery of elements to a user**
Zuführungssystem für Teile zu einem Benutzer
Système d'alimentation d'éléments à un utilisateur

(30) Priority: 10.03.1997 DE 19709714
(43) Date of publication of application: 16.09.1998
(73) Proprietor: PROFIL Verbindungstechnik GmbH & Co. KG, 61381 Friedrichsdorf (DE)
(72) Inventor: Broich, Hans, 82194 Gröbenzell (DE); Vieth, Michael, 61118 Bad Vibe (DE)
(74) Representative: Morgan, James Garnet

(56) References cited:
- DE-A- 4 126 689
- FR-A- 2 670 430
- US-A- 3 759 418
- US-A- 4 762 218
- PATENT ABSTRACTS OF JAPAN vol. 018, no. 558 (C-1264), 25 October 1994 & JP 06 198252 A (YAMATO SCALE CO LTD), 19 July 1994
- PATENT ABSTRACTS OF JAPAN vol. 007, no. 047 (M-196), 24 February 1983 & JP 57 195016 A (MATSUSHITA DENKI SANGYO KK), 30 November 1982

## Description

The present invention relates to a supply system for the delivery of elements to one or more users comprising a forwarding device which supplies the elements from a stored quantity of the elements to a sorting device, which only permits elements having a predetermined position to pass, and with a transport device, which transports the positionally correctly sorted elements to the user. A supply system of this kind is known from DE-A-4126689 for installation parts which are not specified in more detail and which have to be delivered in the correct position to a point of removal. In the end position they are picked up by a gripper device which forms part of a separate transport device for feeding the elements to a user. In the known supply system there is always only one conveyor path module which is used for one type of installation element and the apparatus is not designed to supply a plurality of conveyor path modules with the same or different installation parts simultaneously.

In the sheet metal processing industry stationary or mobile sorting systems and/or transport systems are used for the installation of fastening elements, guide elements or reinforcing elements in sheet metal parts. Mobile units are used as necessary at various points of installation of the elements in a factory.

These sorting and conveying systems are suitable either for the processing of a single type of element or for geometrically closely related families of elements. They consist as a rule of a container which receives the elements which are filled into it as a bulk fill, a sorter which brings the elements into a defined transport position and a transport device which produces the feed force for the transport of the elements to the point of installation.

Known are sorting systems which operate on the basis of vibratory or belt feeders and which sort in-filled elements via features of shape or their center of gravity. For the transport devices one distinguishes between blowing systems and pushing systems. Both vibratory feeders and belt feeders and also the associated blowing and pushing transport devices are available from the company Profil Verbindungstechnik GmbH & Co. KG, Friedrichsdorf, Germany, amongst others, and have been part of their sales program for a long time.

In a special case, in which the sorter can be so arranged with respect to the point of installation that the elements to be processed can reach the place of installation via slides under the action of gravity, the transport device can be formed as a slide.

The above described sorting and transport systems represent a relatively high investment cost, with a restricted spectrum of use because of the direct functional tie to the elements to be processed. An economical use is, as a rule, only possible when correspondingly high production quantities and/or long periods of use are present. The sorting and forwarding devices which have hitherto been produced by the company Profil Verbindungstechnik GmbH & Co. KG, have the following basic layout:

As a rule, the systems are designed as mobile units. In special cases apparatus installed at a fixed location also exists. In both cases the installation of all the components associated with the particular feeding and sorting system takes place on a platform. The elements which are put into the machine in bulk form are moved towards the sorter either with the aid of a vibratory feeder or with drum or chain link feeders with a scooping action (known as belt feeders). Systems based on vibratory feeders have sorting chicanes which so orient the elements via the position of their center of gravity or specific features of shape that only parts oriented in a specific position can pass via slides to the feed apparatus. Elements which do not have the desired position, however, fall back into the supply of elements, i.e. into the element supply chamber.
In contrast systems which are based on belt feeders have sorting chicanes in which the elements have to pass through a chicane corresponding to their outline. Parts which are not correctly oriented position-wise are tipped back into the supply bunker with the aid of a toothed roller or are scraped away, for example, with the aid of a transversely movable comb.

The apparatus for advancing the elements from the sorter to the user, i.e. the transport devices, are based on pushing or blowing systems with the aid of which the elements to be transported are supplied either element by element (blowing method of transport) or in a chain through flexible plastic hoses (pushing method of transport) to the processing station, i.e. to the user.

With blowing systems, the elements are supplied with the aid of a pulse of compressed air through a plastic hose to the processing station at the user.

In contrast, with pushing apparatus, use is made of systems which work with the aid of pneumatic cylinders and systems which are based on the working principle of frictional forces produced by rotating magnetic discs.

The control of the entire sorting and feeding system takes place as a rule through SPS based control cabinets, with the aid of which the interfaces to the operator and optionally to the installation machine can also be monitored. Pneumatic control devices, hydro-pneumatic oiling devices and acoustic and accident protection means complete the functional system.

All the above described pieces of sorting and transport apparatus are so designed that using it only a defined element or a small number of geometrically similar components can be processed.
A problem with the previously known sorting and transport systems is that the close association with the respective element to be transported and with the machine which processes this element, i.e. the user, means that the particular sorting and transport systems are not frequently used, other than in mass production, but must however be available in case the same sheet metal part is to be manufactured again. In other words, the previously known sorting and transport systems represent relatively complicated pieces of apparatus which are however used relatively seldom.

It is the object of the present invention to provide a supply system of the initially named kind which can be flexibly used, even with the need to handle different elements or different connection elements, with it being possible to lower the investment costs and to achieve higher flexibility and a higher use factor.

In order to satisfy this object there is provided the supply system in accordance with claim 1.

In other words, through a modular design, a basic system is achieved which can be used independently of the particular element and which can, if required, be combined with rapidly interchangeable modules which have to be designed in dependence on the elements. This signifies that the basic module is designed for the handling of a plurality of different elements and can thus be used for a spectrum of different elements. In this connection the elements can be filled true-to-type into respective supply chambers of the basic module, or a mixture can be present in one supply chamber or a plurality of supply chambers of the basic module. Should the basic module be used for the feeding of a plurality of like processing stations at the user or at a plurality of users, i.e. should only one type of element be used, then these elements can either be filled into the (single) supply chamber of the basic module or into the supply chambers of the basic module, depending on how the basic module is designed.

The forwarding device which feeds the sorting device can either be designed for the forwarding of elements from all the supply chambers of the basic module simultaneously, or as respective forwarding units for each supply chamber individually. Since a situation relatively frequently arises in practice in which the supply system has to feed a plurality of different working stations at one or more users, with different elements being used for the different working stations, it is possible for the basic module to have a plurality of supply chambers for the different elements. Depending on the design of the basic module from one to six supply chambers can be present, but other numbers of chambers are also entirely conceivable. In this way the danger of mixing can be precluded, i.e. an element of a specific kind or size cannot enter into a neighboring forwarding path for another element, i.e. of a different kind or size.

The sorting device can comprise one sorting unit for the feeding of a single working station of the user or can comprise a plurality of like or different sorting units, whereby the simultaneous feeding of a corresponding number of working stations with like or different elements is possible. Even though the sorting units are each designed for a specific element, and can thus differ from one another, as a result of their design for use with different elements with different manners of transport (for example pushing or blowing), they can, nevertheless, have certain basic dimensions in common, whereby they can, so to say, be arranged alongside one another in accordance with a grid dimension and economically secured to the basic module.

There are several possibilities of coupling the interchangeable modules to the basic module.

On the one hand, a transport carriage can be provided for the interchangeable module in accordance with claim 15, with this transport carriage optionally having space for one interchangeable module or for a plurality of interchangeable modules.

In accordance with claim 16, both the platform of the basic module and also the platform of the transport carriage can have a respective rail means, whereby an interchangeable module located on the rail means of the basic module can be pushed onto the rail means of the transport carriage, and an interchangeable module located on the rail means of the transport carriage can be pushed onto the rail means of the basic module. In this respect a latching means is preferably provided in order to non-displaceably latch the interchangeable module located on the rail means of the basic module to the basic module.

The transport carriage is then preferably designed in accordance with claim 17 to receive at least two interchangeable modules, which each have space on the rail means. The rail means is either located on a rotary table of the transport carriage or the transport carriage can be aligned with the basic module at two positions displaced by 180° by means of corresponding wheels.

In accordance with claim 18 a lifting device can also be used for the exchange of the exchangeable module, or the transport carriage of the exchangeable module can be docked at a docking position at the basic module or can be moved into a receiving bay in the basic module. The transport carriage for the interchangeable module can remain at least substantially always together with the latter and can, when required, also be exploited for the coupling of the interchangeable module to the basic module. For example, the transport carriage can have extendible and retractable wheels which can be used to lift the interchangeable module and to lower the same onto the basic module.

In one possible embodiment, the basic module is formed as a mobile unit, which can be shifted with or without the respective exchangeable module to be installed thereon into the vicinity of any desired users, so that not only the interchangeable modules but rather also the basic module can be selectively used at different locations of use.

Since the basic module includes all the components and modules which are universally usable for different elements, such as for example the installation platform of the basic module, the electrical control cabinet, which includes various functions, the pneumatic module, an oiling system, acoustic and accident protection means, chain conveyors and the element supply chamber or chambers, one succeeds in utilizing the basic module more frequently and the total number of the modules of this kind present in a factory can be substantially reduced, whereby the economics improve. Since the basic module is element-independent, the storage of spare parts and servicing can be made simpler.

Since the element-specific modules (sorter device and transport device) can be rapidly changed, the economics of the solution of the invention are further improved.

The possibility of fully emptying the element supply chamber or bunker aimed at in accordance with the invention likewise enables a rapid changeover of the basic module for the processing of different elements.

Moreover, an automatic adaptation of the control functions of the electrical control cabinet to the manner of operation of the respectively installed transport device and also the storage of the machine parameters which are to be set during the installation procedure are preferably realized. In accordance with the invention, an automatic adaptation of this kind can also take place for the pneumatic supply.

Although the present invention is primarily intended for use with fastener elements and automatic machines, such as presses for the processing of the elements, it can also be used in other areas.

Ultimately, all parts which are delivered in bulk and which can be conveyed individually, for example mechanical components which are to be installed by an automatic machine to form a mechanism, or buttons which have to be delivered to different automatic sewing machines, can ultimately be considered as elements.

Further preferred embodiments of the invention can be found from the subordinate claims and also from the subsequent description.

The invention will be described in the following in more detail with reference to the drawings, which show:
- Fig. 1: a schematic illustration of a modular supply system in accordance with the invention at a press,
- Fig. 2: a partly sectioned illustration of the apparatus of Fig. 1 as seen at the section plane II-II in Fig. 1,
- Fig. 3: a side view of a modularly built up supply system in accordance with the invention directly prior to the exchange of the exchangeable module,
- Fig. 4: a plan view of the apparatus of Fig. 3,
- Fig. 5: a representation similar to Fig. 3, but in a first stage of the exchange of the module,
- Fig. 6: a plan view of the supply system of Fig. 5, but at a somewhat later point in time,
- Fig. 7: a representation similar to Fig. 5, but at a later stage of the exchange of the module,
- Fig. 8: a plan view of the supply system of Fig. 7 but here also at a later point in time,
- Fig. 9: a representation similar to Fig. 3, but in the last stage of the exchange of the module,
- Fig. 10: a plan view of the supply system in accordance with Fig. 9,
- Fig. 11: a side view of a variant of the modular supply system in accordance with the invention shortly before exchange of the module is carried out,
- Fig. 12: a plan view of the supply system in accordance with Fig. 11,
- Fig. 13: a representation in accordance with Fig. 11, but at a later point in time during the exchange of the module,
- Fig. 14: a plan view of the supply system of Fig. 13,
- Fig. 15: a representation in accordance with Fig. 11, but after carrying out the exchange of the module,
- Fig. 16: a plan view of the supply system of Fig. 15,
- Fig. 17: a side view of a further variant of a modular supply system in accordance with the invention,
- Fig. 18: a plan view of the supply system of Fig. 17,
- Fig. 19: a representation in accordance with Fig. 17, but in the first stage of a module change,
- Fig. 20: a plan view of the supply system of Fig. 19,
- Fig. 21: a representation corresponding to the Fig. 19, but at a later point in time of the module change,
- Fig. 22: a plan view of the supply system in accordance with Fig. 21,
- Fig. 23: a representation in accordance with Fig. 21, but after separation of the exchangeable module from the basic module,
- Fig. 24: a plan view of the supply system in accordance with Fig. 23,
- Fig. 25: a side view similar to Fig. 3, but with a further modular supply system in accordance with the invention,
- Fig. 26: a plan view of the supply system of Fig. 25,
- Fig. 27: a side view in accordance with Fig. 3 of a further variant of a modular supply system in accordance with the invention,
- Fig. 28: a plan view of the supply system of Fig. 27,
- Fig. 29: a partly sectioned side representation of a modular transport device in a pushing embodiment,
- Fig. 30: a cross-section corresponding to the section plane XXX-XXX of Fig. 29,
- Fig. 31: a cross-section through a modular transport unit in a blowing embodiment prior to the coupling on of the transport line,
- Fig. 32: a representation in accordance with Fig. 31, but after coupling on of the transport line and directly before blowing,
- Fig. 33: a sectional representation in accordance with the section plane XXXIII-XXXIII of Fig. 31 to the left hand side of the central axis in Fig. 33, while the right hand half shows a corresponding sectional drawing from the stage of Fig. 32, in both cases after the transport line has been coupled on,
- Fig. 34: a plan view on the embodiment of Fig. 31, as seen in the direction of the arrow XXXIV, and
- Fig. 35: an alternative transport unit in a magnetic embodiment.

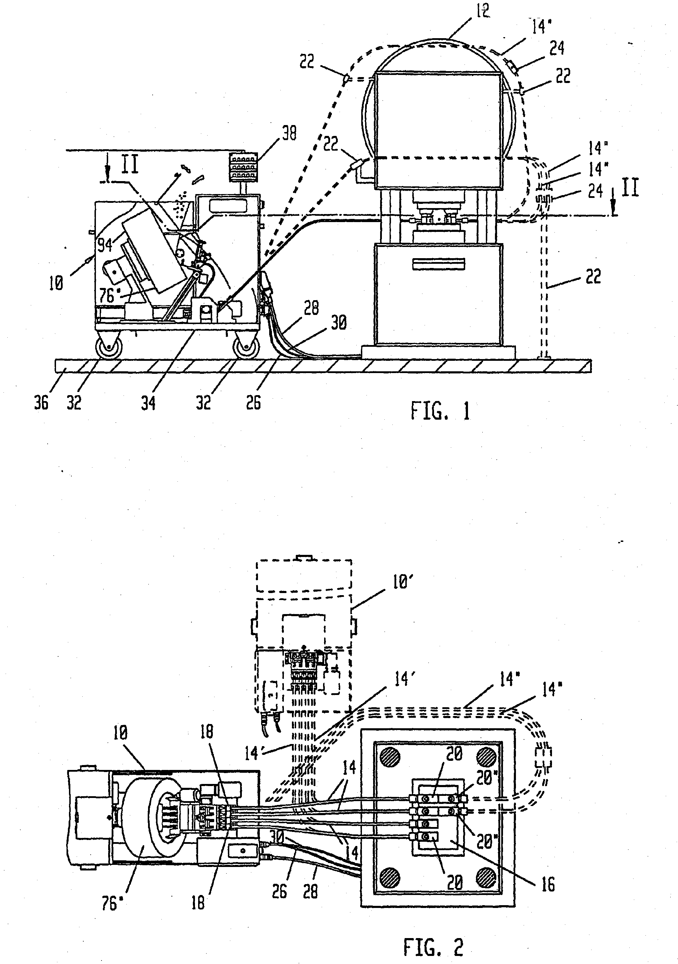

Figs. 1 and 2 show, first of all, a schematic representation of the supply system 10 in accordance with the invention, which is designed here for the delivery of connection elements (not shown) to a user in the form of a press, wherein the non-illustrated elements are guided via lines 14 to a tool 16 located in the working region of the press. The lines 14 can, for example, be realized in the form of supply hoses, forwarding rails or guide rails for elements.

In this specific example, four lines 14 are provided, which start from four transport units 18 arranged alongside one another in the supply system and lead to respective setting heads 20 within the press, with the four setting heads 20 in this example being associated with the upper tool 16 of the press 12. The lines 14 are flexible plastic hoses, so that the positioning of the supply system with respect to the press is not critical. The supply system 10 can, for example, be arranged in the broken-line position 10' in Fig. 2, whereby the lines 14', which are correspondingly shown in broken lines, lead via gentle 90° arcs to the individual setting heads 20. The reference numeral 14" indicates the possibility of selectively guiding the lines to the rear side of the press to two further setting heads 20" in the upper tool 16. If the two lines 14" are simultaneously used with the four lines 14 and 14' respectively, then two further transport units (18) not shown must be present in the supply system 10.

Fig. 1 shows that the lines 14" can be guided in different manners to the rear side of the press, with the example in Fig. 1 showing two alternative possibilities for the lines 14", namely passing laterally past the press - as also shown in Fig. 2 - or however passing over the top side of the press. In both cases suitable holders 22 are provided. The reference numeral 24 indicates connectors which can be used to connect the lines if an extension beyond the basic length is necessary.

The representation of Figs. 1 and 2 merely give examples for the paths of the lines 14. They are in no way to be regarded as restrictive. Both the number of the respective lines and also the paths, arrangement, suspension, and support of the individual lines can in principle be selected as desired. The setting heads 20 need also not be arranged on the upper tool of the press, they can also be arranged on the lower tool of the press or also on a tool arranged on an intermediate plate.

The supply of the elements from the supply system to the press must harmonize with the working cycle of the press. For this purpose electrical lines 26 and also pneumatic lines 28 and optionally also hydraulic lines 30 extend between the press and the supply system.

It can, moreover, be found from Fig. 1 that the supply system includes an installation platform 34, which is movable on wheels 32. In this manner the supply system can easily be displaced to different positions within a factory. The wheels can optionally be equipped with brakes in order to hold them in a selected operating position relative to the press. Other stopping possibilities can also be considered, for example direct screwing or anchoring of the platform 34 to the floor 36 of the factory room.

It is not absolutely essential that the platform 34 has wheels. It could, for example, also be executed as a pallet, so that a displacement is possible at any time, for example by means of a low lift platform truck or a forklift truck.

The reference numeral 38 indicates a display and switching panel, which can be used by the operator.

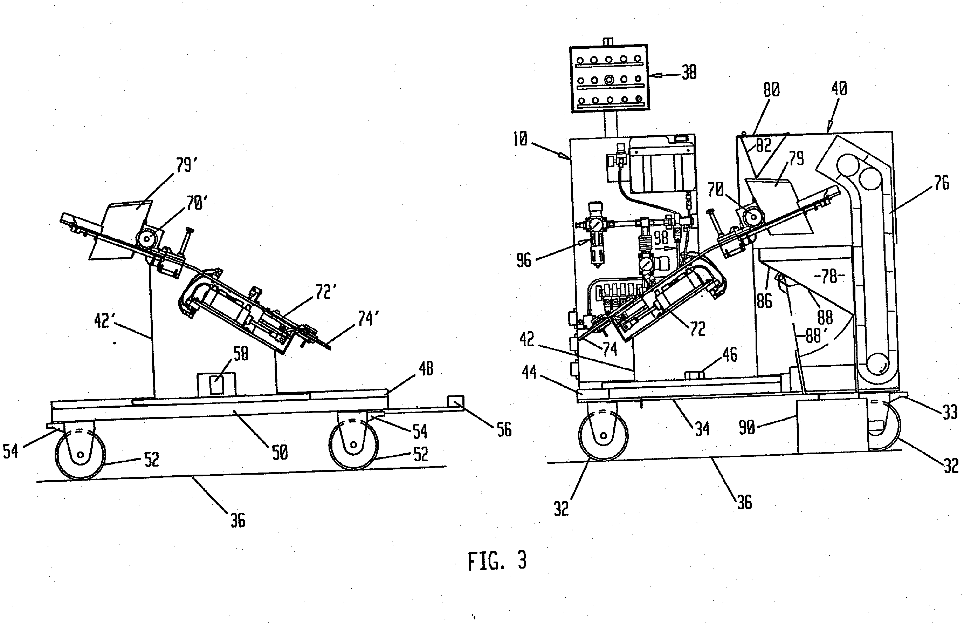

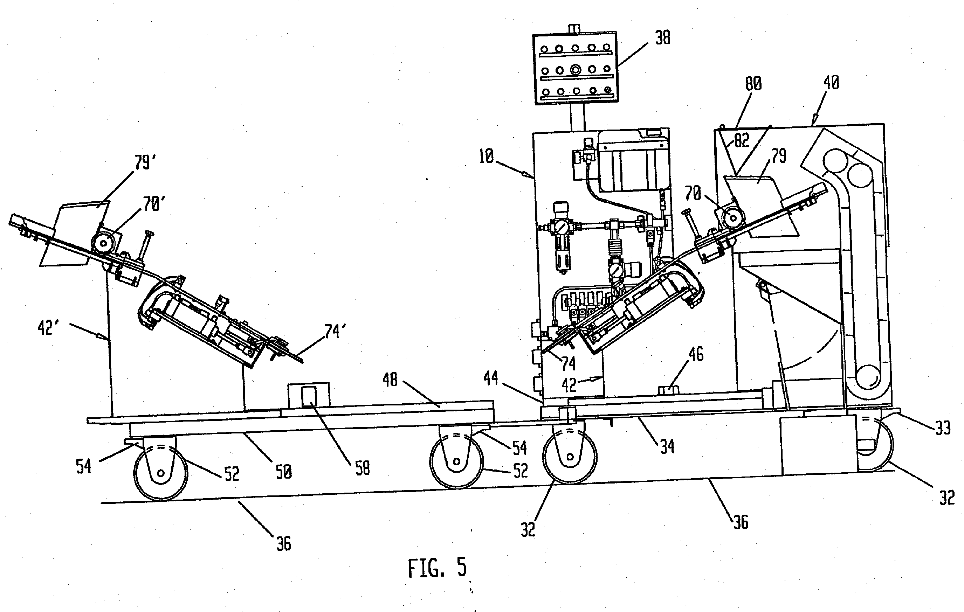

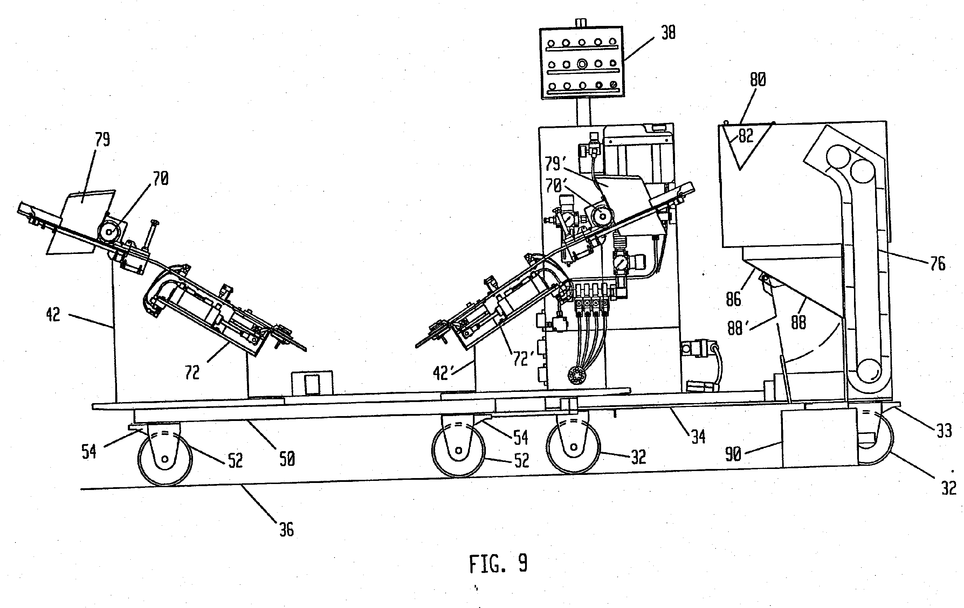

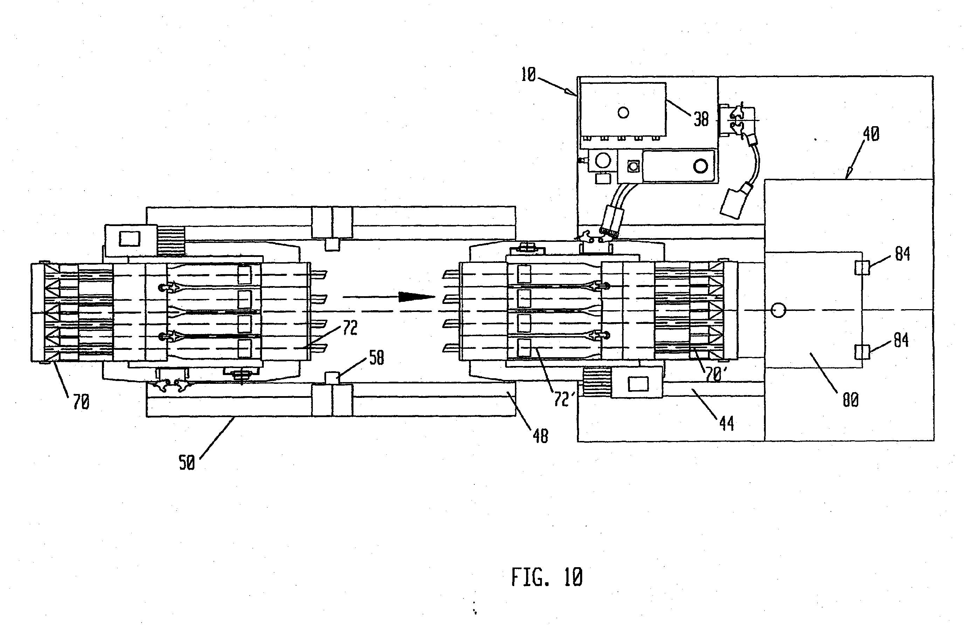

The layout of a first embodiment of the modular supply system of the invention will be explained in the following in more detail with reference to Figs. 3 to 10, with these drawings also serving to explain the exchange of the exchangeable module.

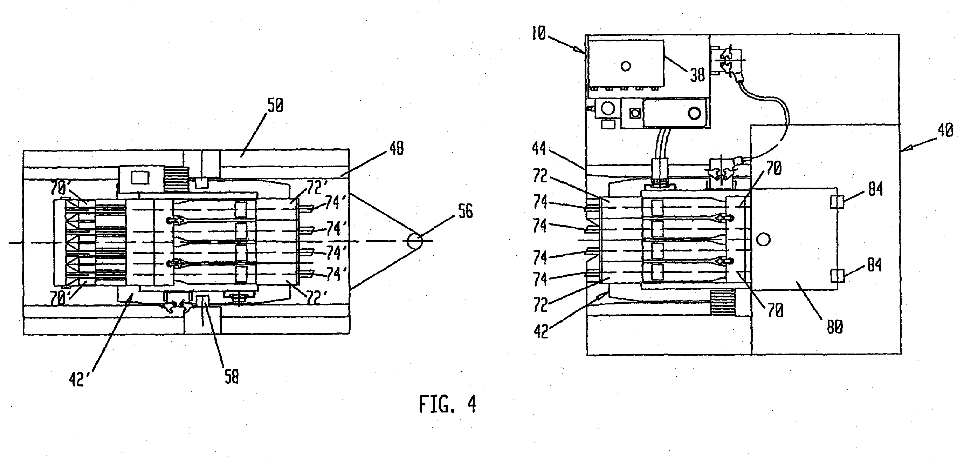

Referring to Figs. 3 and 4, the basic module 10 of Fig. 1 can first be seen, which is however turned through 180° here relative to the embodiment in Fig. 1, and also uses a differently designed forwarding device or feeder.

In these figures and also in all subsequent figures the same reference numerals will be used for the same components and also components with the same function. It will be understood that the whole description applies in the same way for all parts with the reference numerals, and indeed even then when these parts are provided with a dash at the top or a double dash at the top, i.e. for the sake of economy a repeated description of the same parts or parts with the same function in the different embodiments will be dispensed with.

The modular supply system 10, i.e. the modular supply apparatus 10 of Fig. 3, is also formed here as a mobile unit with wheels 32, with the wheels also being attached here to the platform 34. This platform 34 belongs to the so-called basic module 40. In the illustration of Fig. 3, an exchangeable module 42 is located in the mobile unit 10 in addition to the basic module 40, and is installed on the platform 34 of the basic module 40. Stated more precisely, the installation platform 34 is equipped with rails 44, on which the interchangeable module 42 is linearly displaceable but can be registered in the working position by pins (not shown) and latched mechanically via a quick acting closure 46 to the basic module 40 in the desired position on the rails 44.

At the left of the mobile unit 10 there is located a second exchangeable module 42' which is arranged on rails 48 corresponding in their design to the rails 44. The rails 48 are in turn mounted on a transport carriage 50, with the transport carriage in this embodiment likewise being equipped with wheels 52 and corresponding brake devices 54.

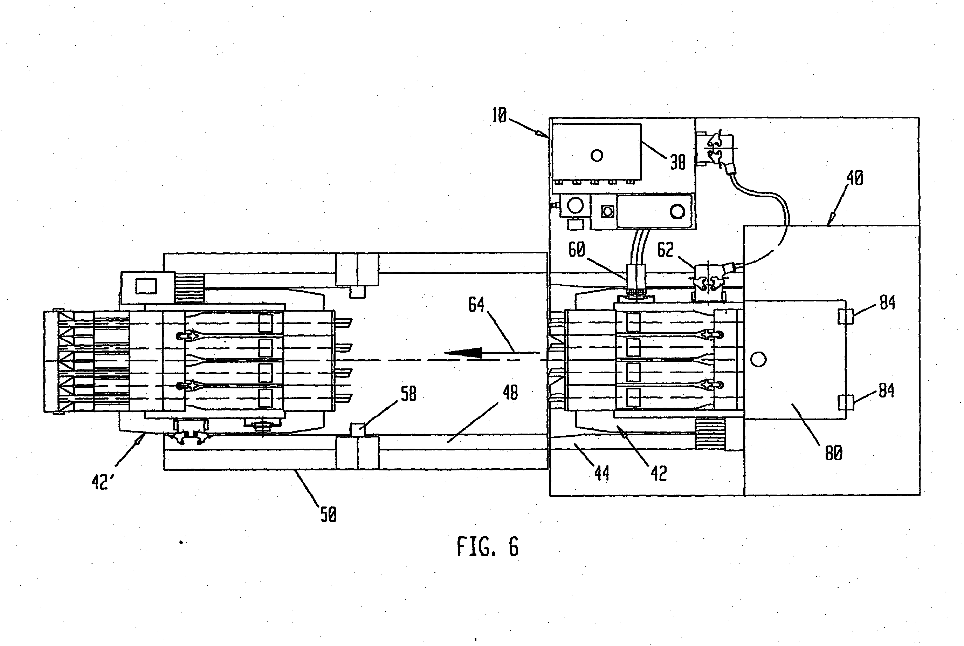

At the side of the transport carriage 50 facing the mobile unit 10 there is located a centering device 56, which, on the movement of the transport carriage 50 up to the docking position at the mobile unit 10, is received in a corresponding recess in the mobile platform 34 and can optionally be latched to this mobile platform by a latch bolt or the like. In this docking position, optionally with latching, the rails 48 are aligned with the rails 44 and merge directly into one another, for example as is shown by Fig. 6.

Prior to the movement of the transport carriage up to the docking position of the basic module the exchangeable module 42' is first shifted, after releasing the latch 58, from the middle transport positionrin accordance with Fig. 3, to the left on the transport carriage 50 in order to provide space at the right hand side of the transport carriage 50 for the reception of the module 42 to be exchanged.

Fig. 6 shows the transport carriage docked at the docking position directly prior to the exchange of the exchangeable module 42. Prior to the exchange of this module, a multi-plug 60 for the pneumatic system and a multi-plug 62 for the electrical system have to be separated from the exchangeable module 42. After the release of the mechanical quick acting closure 46, the exchangeable module 42 can be shifted in the direction of the arrow 64 to the left, onto the right side of the transport carriage 50, with the aligned rails 48 and 44 serving for this purpose.

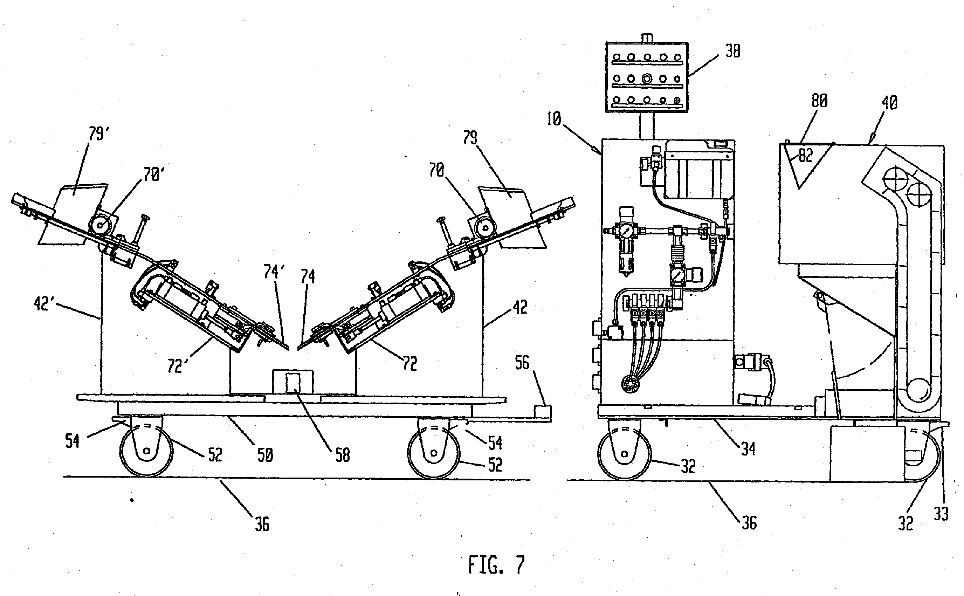

After the module 42 to be exchanged and the module 42' to be newly inserted into the mobile unit are both present on the transport carriage 50, the coupling 56 of the transport carriage to the mobile unit 10 is released. The released state is shown in turn in Fig. 7.

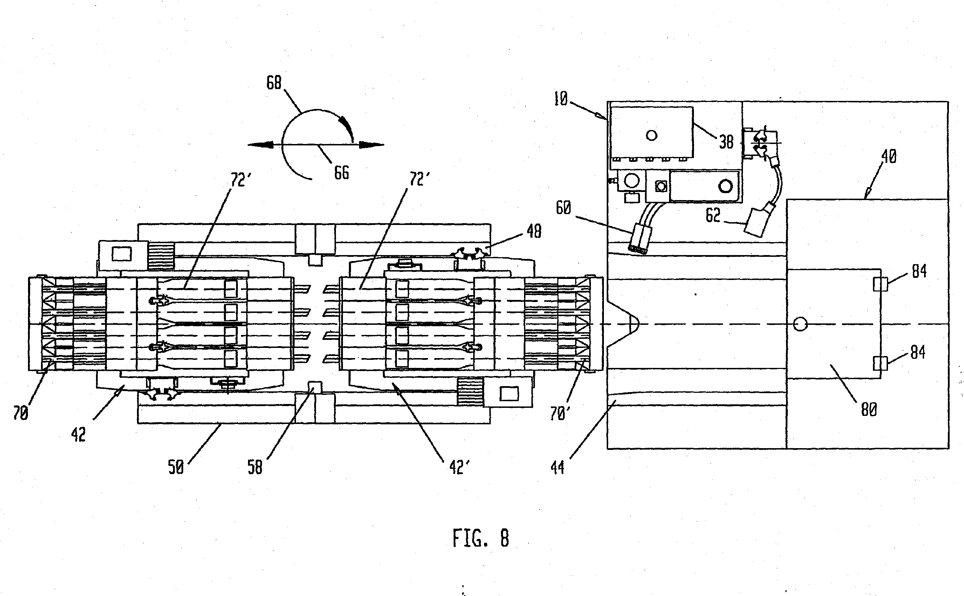

The transport carriage can now be moved away from the mobile unit 10, turned around and moved towards the mobile unit 10 again, which is schematically illustrated by the double arrow 66 and the arrow 68 in Fig. 8. After this movement the exchanged module 42 is located at the left hand side of the transport carriage 50 in Fig. 8, while the exchangeable module 42' is now present directly in front of the mobile unit 10. The transport carriage 50 is now moved again to the docking position at the mobile unit 10 and the exchangeable module 42' is pushed, optionally after latching the transport carriage 50 to the mobile unit 10, from the rails 48 onto the aligned rails 44 of the mobile unit until it strikes the registration pins (not shown) and a mechanical quick acting latching device 46 snaps into place for the mechanical latching of the newly exchanged module 42' or is engaged in order to non-displaceably couple the exchanged module 42' to the mobile unit 10. The multi-plug 60 for the pneumatic system and the multi-plug 62 for the electronic system can now be coupled to the newly exchanged module 42'. After the removal of the transport carriage to the left and after shifting of the exchangeable module 42 into the center of the transport carriage, the situation of Fig. 3 has again been produced.

Instead of turning the transport carriage 50 around in accordance with the arrow 68, it is entirely conceivable to install the rails 48 of the transport carriage 50 on a rotary table (not shown), which should then be rotatably arranged about a vertical axis of rotation arranged approximately at the center of the transport carriage 50, so that only a small separation of the transport carriage from the mobile unit is necessary in order to rotate the rotary table, which is likewise schematically represented by the arrow 68. The separation of the transport carriage from the mobile unit must only be sufficient in order to ensure the rotatability of the rotary table, without the modules striking the mobile unit.

In the representation of Figs. 3 to 10, the exchangeable module 42 and also the exchangeable module 42' consist of four like sorting devices 70 and 70' arranged alongside one another, which are coupled to the respective transport device 72 and 72' respectively and supply elements sorted in accordance with the features or shapes and/ or the position of the center of gravity to the respective transport units 72 and 72' respectively.

The four like sorting devices 70 and 70' and the corresponding transport devices 72 and 72' are in each case formed as a unit, i.e. a module, so that the exchangeable module is itself of modular design and can be rapidly assembled from individual sorting and transport units 70 and 72 by connecting together the desired number of units depending on how many such units are to be present in the exchangeable module. For this reason, the sorting devices 70 and 70' and transport devices 72 and 72' will frequently be referred to in the following as "units". It will be understood that the devices and the units are one and the same thing, and the term unit is merely meant to emphasize the modular design of the respective devices.

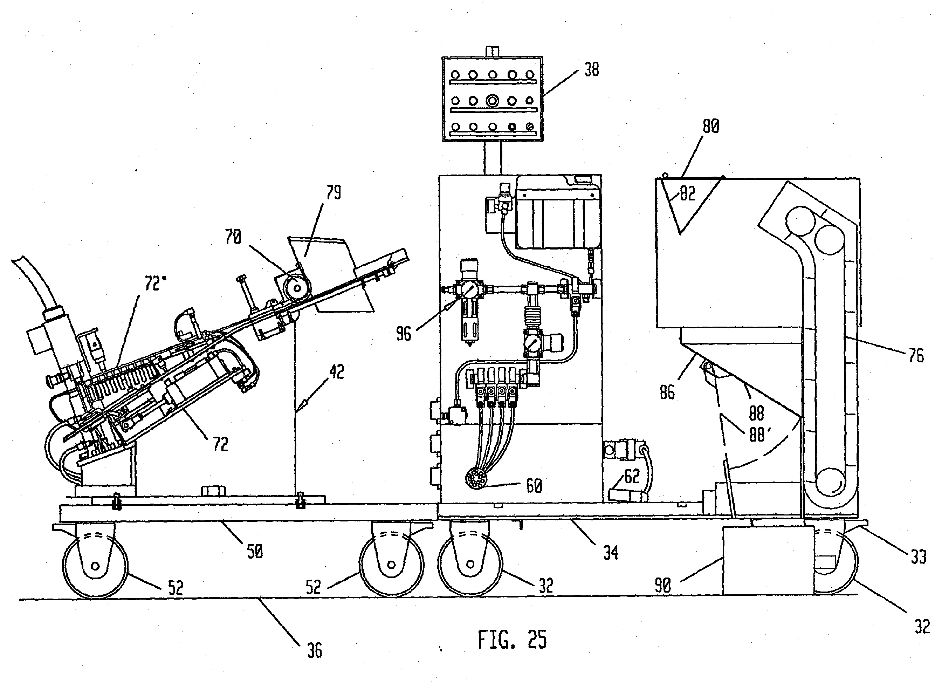

The precise design of the respective sorting units 70 and 70' and of the transport units 72 and 72' respectively is not of particular importance. These components can be designed in accordance with the previously known components used for the same purpose, e.g. as sold by the present applicants, provided that they are designed in such a way that they can be arranged in space-saving manner alongside one another in a multiple-arrangement, as with the four respective units, which are shown in Figs. 3 to 10. For the sake of completeness, examples of transport units operating with blowing and pushing will be described later with respect to the Figs. 25 to 35.

Although in the Figs. 3 to 10 four like sorting devices, 70 and 70' respectively, and four like transport devices, 72 and 72' respectively, are shown, so that one could assume that they can be used for four identical or similar elements in different sizes, the modularity of the present invention is so selected that in the embodiment shown here the four sorting and transport devices can be selected at will in order to dispense up to four elements from a total spectrum of elements of different types and sizes to the respective user.

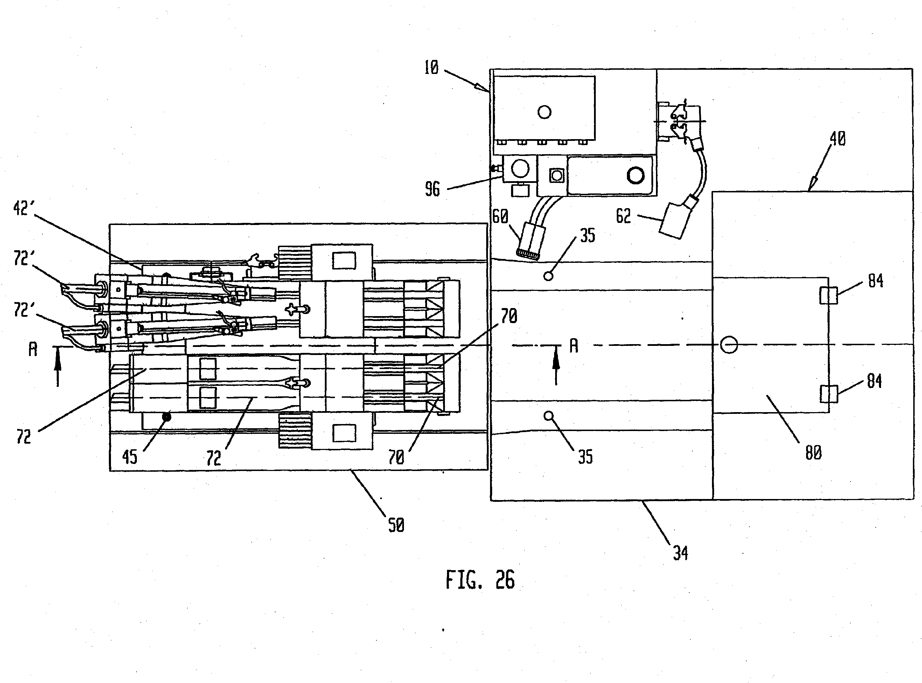

By way of example, a quadruple arrangement is shown in the illustration of Fig. 26, with two tracks for the pushing feeding of nuts through transport devices 72 as previously described and two tracks for the blowing transport of bolts by means of blowing transport devices 72". That is to say, a total of four transport devices 72 and 72", which are likewise of modular design, are arranged in four tracks alongside one another.

Expression should also be given to the fact that the invention is not restricted to the use of four tracks or transport devices. In principle, any desired number of tracks can be provided. An apparatus can also be equipped with only one to three transport devices or with more than four transport devices. The modular concept makes it possible to equip the mobile platform 50 of the interchangeable module 42 and 42' as desired with sorting and transport devices 70, 70' and 72, 72', 72" of different modular designs.

In the Figs. 3 to 10 one can see, moreover, the connections 74, 74' for the lines 14, 14' and 14" respectively of Figs. 1 and 2. These lines are normally coupled, in accordance with the invention, via quick acting couplings, to the respective connections 74 and 74', which is naturally a precondition for the supply of the respective elements to the user.

The basic module 40 of Fig. 3 includes a forwarding device or feeder 76 which serves for the forwarding of the elements from a supply chamber 78 to the sorting device 70. Various possibilities exist of the design of this forwarding device.

If the same elements are delivered to all the sorting and transport devices, then one can operate with a forwarding device 76 - shown in Figs. 3 to 10 as a chain conveyor, which lifts the elements out of the supply bunker 78, using plates 76' connected to the recirculating chain76" of the chain conveyor and feeds them to the sorting chicanes associated with the sorting devices, from where all the elements which are not aligned in the transport position drop back via the slide 79 into the supply bunker. The feeding of the elements to the sorting units 70 can simply consist of the belt feeder or chain conveyor lifting the elements from the supply chamber 78 and dropping them onto the sorting units 70.

It can, for example, also be seen from Fig. 3 that the elements can be filled into the supply bunker 78 via a filling flap 80 hinged at 84 and a slide 82, for which it is necessary to first open the flap 80.

In the lower inclined wall 86 of the supply bunker 78, there is likewise located a flap 88, which can be pivoted outwardly into the position 88' in order to fully empty the supply bunker 78. During this the elements still located in the supply bunker 78 fall into a box 90 arranged beneath the mobile platform 34. When the flap 80 is open, it is possible to check that the supply bunker 78 has been fully emptied. This would normally be done when a module change of the exchangeable module 42 is carried out, because the module 42 to be exchanged is normally only exchanged when the user is to be equipped for use with other elements or other element sizes or with a different complement of elements.

In the most preferred embodiment, only one supply chamber or bunker 78 is provided and is filled with just one type and size of element. In this way there is no danger of different types and sizes of elements being confused either by the sorting units 70 in use or by the operator when refilling the supply chamber 78. The modular design is of importance in such a case. First of all, any number of units 70, 72 for the sorting and transport of the elements can be used up to the maximum number permitted by the design of the basic module 40. Secondly, it is readily possible to convert the system to use different numbers of units 70, 72 for the sorting and transport of the elements. Thirdly, sorting and transport units 70' and 72' not in use with the one basic module 40 can be used with another basic module 40 rather than simply lying idle, as would be the case if a prior art purpose design system was used at less than its full capacity. Fourthly, the conversion from one type and size of one element to another can also be effected quickly. It is simply necessary to remove all unused elements from the supply chamber and to replace them with a new type or size of element and to exchange the sorting and transport units 70, 72 previously used for new ones 70', 72', which can be used with the new type and size of element. In addition, the components belonging to the basic module 40 are used more cost-effectively. In the absence of the modular system of the invention, these components would all have to be present twice, once for the sorting and transport system 70, 72 in use, and once for the sorting and transport system 70', 72', of which use has been temporarily discontinued. Moreover, the conversion from one type and size of element to another can take place very quickly and storage space is minimized.

The sorting and transport units 70', 72' can all be rapidly connected together by any convenient means and exchanged as a whole. The basic module 40 simply has an opening for receiving the sorting units 70, 70' of the sorting and transport units 70, 72'. Baffle elements or plates present on the sorting units and within the basic module prevent elements from escaping from the basic module and ensure that, if they are not passed on by the sorting units, they fall back into the supply chamber 78.

If fewer than the maximum number of sorting and transport units 70, 72 are used, then any remaining part of the receiving opening in the basic module not already covered over by the units 70, 72 in use can be simply covered over by a plate mounted on the exchangeable module or by a plate mounted on the basic module, and of course the design of such a blanking plate can be chosen so that it can be removed and fitted extremely quickly.

It will be noted that the connection between the exchangeable module 42, 42' and the basic module 40 conveniently takes place at the base plate 34 of the basic module 40 so that no physical connection is necessary at the periphery of the receiving opening of the basic module 40. However, this would also be possible if desired. Moreover, if desired, guide means could be provided at or close to the receiving opening to ensure adequate guidance of the sorting units 70, 70' when inserted into the receiving opening.

The above described advantages also generally apply to the other variants of the supply system of the invention described herein.

The toothed rollers and transversely moveable combs of the sorting units and the chain or belt of the belt feeder are usually driven by respective electric motors. The connection to the electric motors for the toothed rollers and transversely moveable combs of the sorting units are effected via the electrical multi-plug 62. The drive connection to the motor of the belt feeder 76 forms part of the basic module.

It is likewise possible to operate solely with one supply bunker when different elements are to be processed. In this case the different elements are put into the supply bunker 78 as a mixture and the sorting takes place automatically via the respective tracks, i.e. via the respective sorting devices 70, 70' associated with the respective transport devices 72, 72', 72".

Another possibility lies in providing the supply chamber 78 with a number of supply chambers (not shown), which corresponds to the number of the sorting units and tracks that are provided. The chain conveyor 76 is laid out using partition webs so that only elements from the respective supply chambers can be fed to the respective sorting devices without passing undesirably into neighboring supply chambers. With this arrangement, sorting also takes place through the sorting devices, but here in such a way that only elements which have the correct transport position are passed on further to the transport devices. Should an element, despite this subdivision into supply chambers, not pass true-to-type to the respectively associated sorting device, then it is nevertheless rejected by the sorting device, assuming that the sorting devices are so designed that they only allow elements to pass which have the correct shape, size and transport position. If separate supply chambers are provided, then the sorting devices are preferably so designed that elements which are not let through, for example because they have the false position, drop back into the respectively provided supply chambers in order to avoid an undesired mixing of the elements.

In an arrangement with a plurality of supply chambers it is also advantageous when all the supply chambers can be simultaneously emptied, for example through a flap 88, which is provided in common for all supply chambers, but which has perpendicular webs which prevent mixing of the emptied elements.

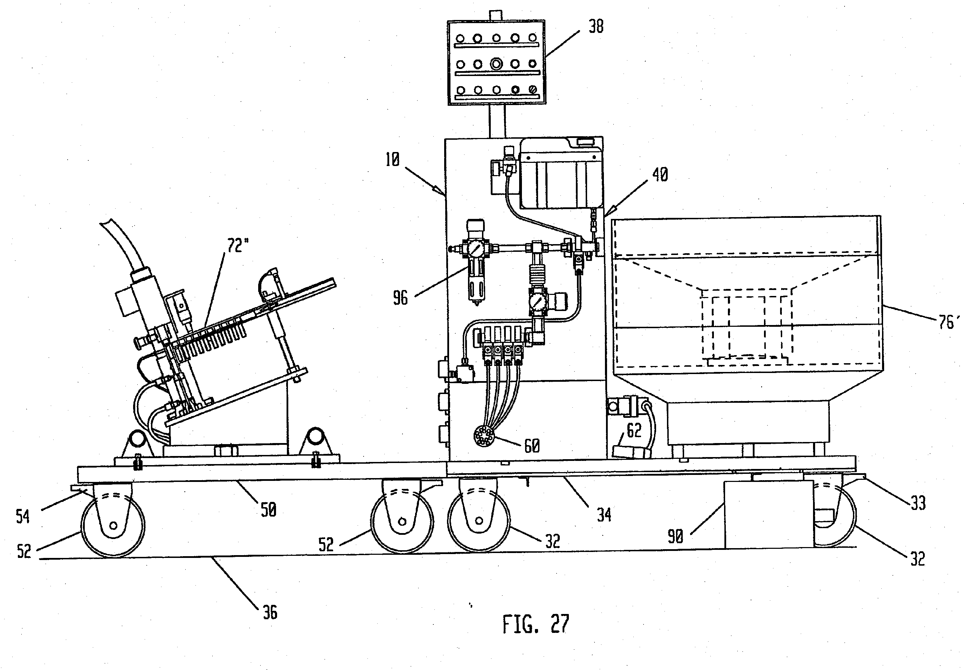

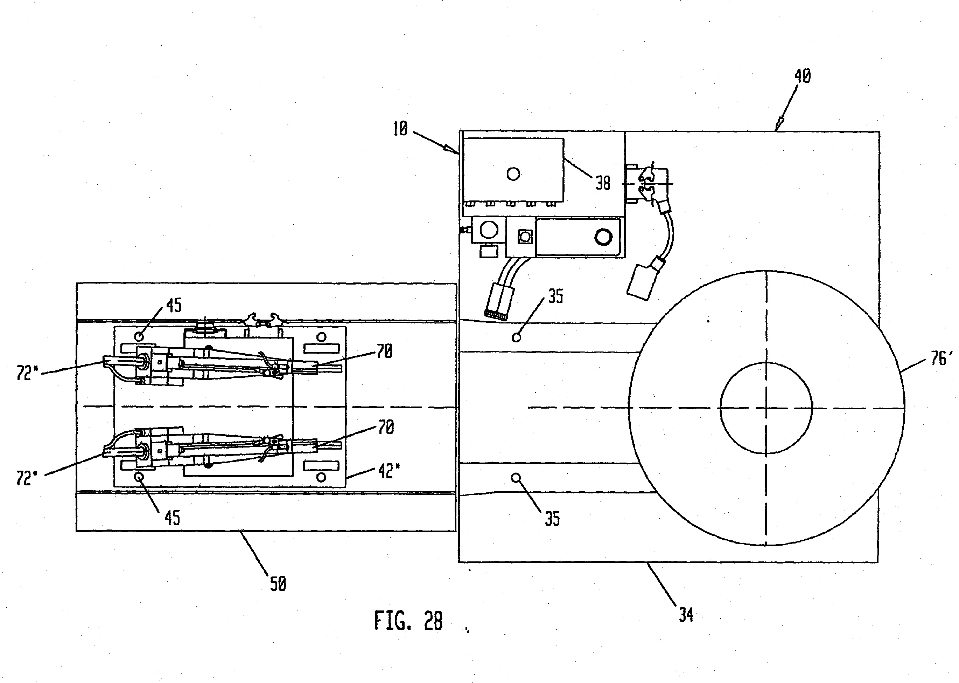

At this point expression should also be given to the fact that the forwarding device does not necessarily have to be designed as a chain conveyor. There are certainly other possibilities, for example the possibility of designing this device as a so-called vibratory feeder 76' as shown in the embodiments of Figs. 27 and 28, or one can also operate with an inclined rotatable drum 76", a drum feeder, as shown in the embodiment of Figs. 1 and 2, with it being necessary, with this embodiment, to operate with a mixture of elements, unless all the attached tracks are provided for the processing of the same element. In this case the drum conveyor 76" again contains elements of just one type (i.e. and size).

The mobile unit 10, i.e. the basic module 40, is in other respects provided with all the further components, which belong to the basic module 40, because they can be universally used.

This relates to the electrical control cabinet with display 38, a pneumatic module 96, an oiling system 98 and also noise and accident protection devices. The electrical control cabinet 38 includes the following devices, which are not separately shown but which are important for the universal applicability of the basic module. The components in accordance with the list which follows here are in each case known per se in customary supply systems and are here simply so combined by corresponding interfaces, for example connected to the programming, that they can be used for all the exchangeable module 42, 42', 42", which can be connected to the basic module 40. The components of the control cabinet are the following:
a) mains connection,
b) input and output units,
c) programmable control for the control or regulation of operating parameters, such as for example the switching on and off of the forwarding device 76, 76', 76", for the control or regulation of the working speed of the forwarding device 76, 76', 76", for the regulation of the pressure of the transport device 72, 72', 72", and also in a manner specific both to the elements and to the particular application for the regulation of the supply pressure of setting heads 20, 20" connected to the transport devices 72, 72', 72", i.e. to the lines 14. 14', and of the pressure of the oiling device 98
d) a recognition device for the recognition of the functional component groups 70, 70', 72, 72', 72", which are present at the interchangeable module 42, 42', 42" and connected to the basic module 40,
e) connections to which signals from sensors present at the basic module 40 or at the interchangeable module 42, 42', 42" or at the user 12, such as for example filling state measuring sensors on the basic module 40, and end switches, end position sensors at the transport device 72, 72', 72" and in the setting head 20, 20' can be applied and, if required,
f) one or more connection lines 26, 28, 30 for the signal transmission between the supply system 10 and the user 12 and/or from the user 12 to the supply system 10.

Moreover, the supply system, i.e. the basic module, has the pneumatic supply 96, which can, for example, include a filter, an oiler (including an oil tank), a water separator, valves, power units and also one or more connection devices, and optionally a compressor unit, with the coupling of the pneumatic supply to the exchangeable module 42, 42' or 42" preferably taking place via the multi-plug 60.

First of all, it is pointed out that although compressed air is available in most factories, situations can certainly arise in which the performance of the factory internal pneumatic supply system is almost at the limit of its capability, or in which pressure fluctuations have to be feared which cannot be reconciled with the operation of the supply system of the invention. In order to guard against such cases it can be sensible to equip the supply system with its own compressor unit, which then belongs to the basic module. Otherwise, if an adequate factory internal supply system is present, then the required compressed air can be taken from this system.

Depending on how the transport devices 72, 72', 72" are designed and which element types and sizes are to be processed, a respective compressed air requirement is determined for each transport device, which can, amongst other things, also depend on the length of the respective line 14, 14', 14" respectively. The once found values for the operating parameters for specific configurations, such as values for the air pressure and the rate of the oil feed are, for example, fed in to a microprocessor or into a memory in the control cabinet via an input unit, or the respectively attached exchangeable module and also the sorting and/or transport devices associated with it, are recognized by the system itself on the connection of different exchangeable modules, whereby the desired controls can automatically be effected in accordance with the previously programmed or stored values.

The multi-plug 60 for the pneumatic system is preferably so designed that the pneumatic supply can recognize which tasks it has to satisfy for the respectively connected exchangeable module. Here also one can turn to the corresponding previously fixed pressure values and flow quantities. All these measures ensure that with a module change, a quick and economical adaptation to the various circumstances of the inserted, exchangeable module 42, 42', 42" takes place.

The basic module 40 also includes the oiling device 98, which can either be supplied from the pneumatic supply 96 or separately. The point of this oiling device is to provide the individual elements or a number of them with a small quantity of lubricant so that, on the one hand, they slide without problem through the supply system to the user and, on the other hand, to ensure, if required, improved frictional conditions at the user by the transmission of lubricant. The oiling system can also differ in a manner specific to the element or to the application, depending on the requirements.

The basic module, however, also includes a noise and safety protection means. The noise protection consists, above all, of an insulation (not shown), which is provided in the region of the supply bunker 78, of the forwarding device 76 and of the surrounding housing and sheet metal parts, for example also at the flap 80 and at the flap 88. In this way operating noises are damped so that the noise level of the supply system can be kept within acceptable limits. Acoustic insulation around the transport devices can, if necessary, also be provided because these also produce operating noises.

Contacts which prevent the supply system being taken into operation when the flap 80 or the flap 88' are opened, or with faulty connections of the exchangeable module, or light barriers which prevent operation when an operator or an unauthorized person reaches into areas of the supply system, belong to the important safety devices. Such safety devices should also serve to interrupt the operation of the supply system when, during operation, a flap is opened in unauthorized manner, or someone interferes in dangerous regions of the supply system.

The invention will now be explained in more detail with reference to further embodiments.

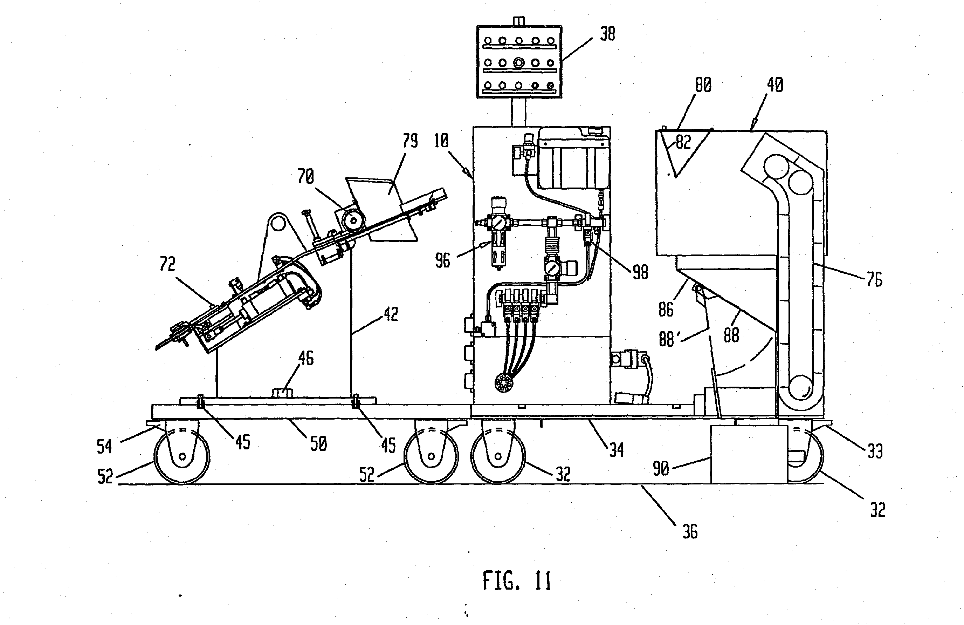

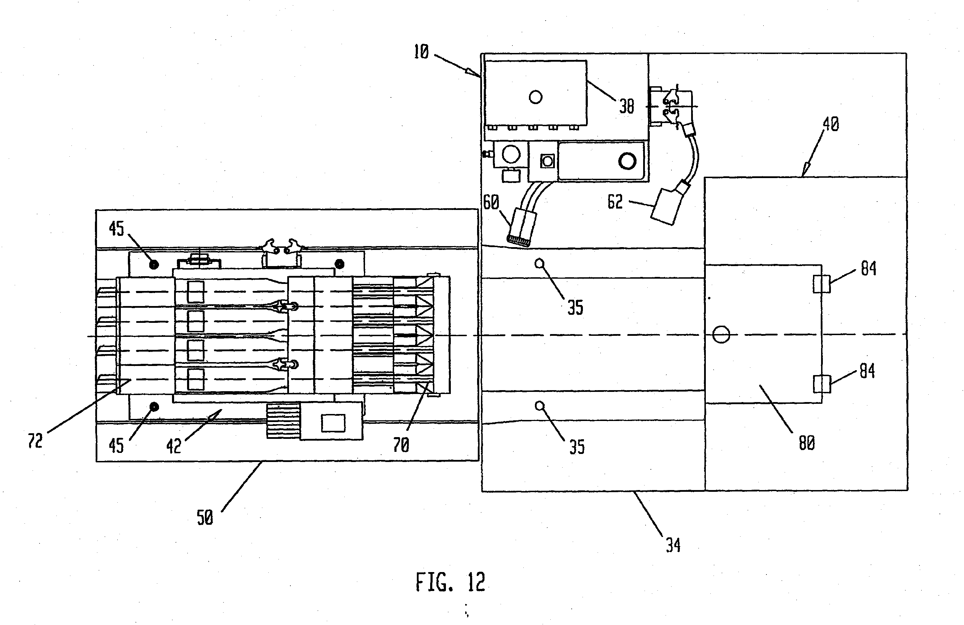

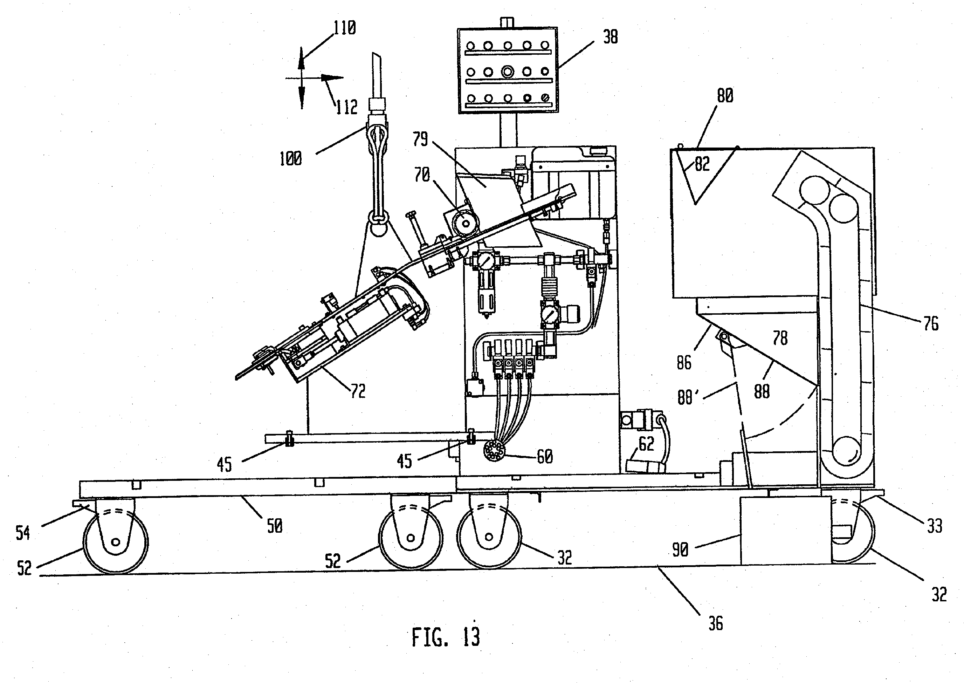

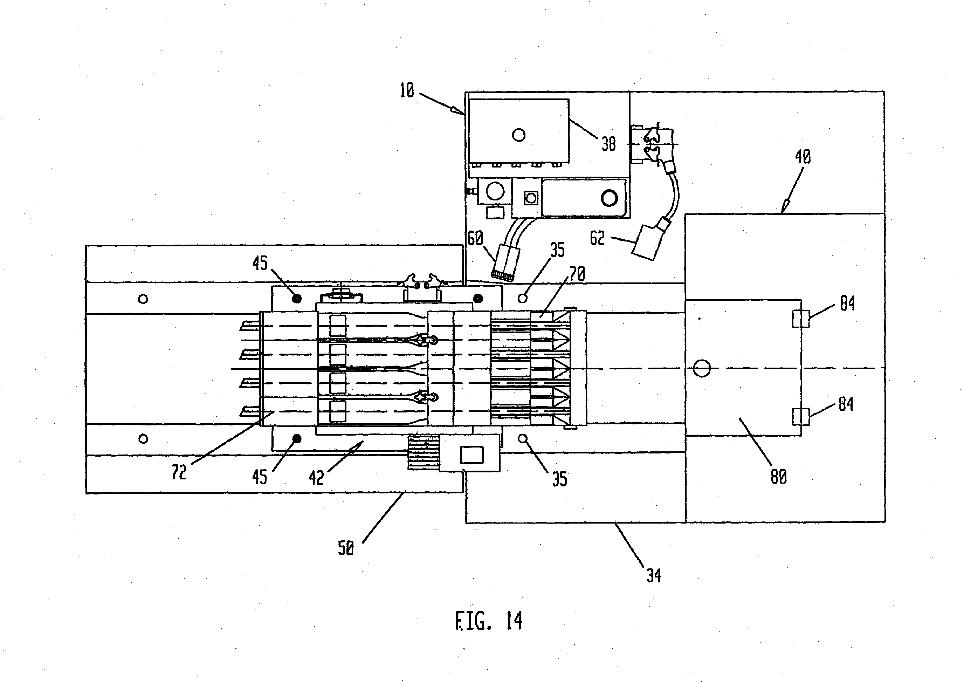

Figs. 11 to 16 show an alternative way of effecting a change of the exchangeable module. For this purpose a separate transport carriage 50 is provided for each exchangeable module. Fig. 11 shows a situation in which the basic module 40 is available to receive an exchangeable module 42. The exchangeable module 42 is located on the respective transport carriage 50. In this embodiment rails are avoided. In place of this, the mounting platform 34 is equipped with conical centering spigots 35 or other guide means (Fig. 12), onto which the exchangeable module 42', which has been transported into place is lowered from above by means of a lifting device 100. A conical bore 45 is machined into the base plate 51 for the exchangeable module for each centering spigot 35, so that a form-locked latching prevents horizontal slippage of the module. A central mounting screw 46 prevents a movement in the vertical direction. In the Figs. 11 and 12 the transport carriage 50 is moved into the direct vicinity of the basic module 40, i.e. of the mobile unit 10. The Figs. 13 and 14 show the lifting (arrow 110) and the horizontal transport (arrow 112) of the lifted exchangeable module 42', which is subsequently lowered in accordance with the arrow 114 onto the centering spigots 35 at the mobile platform 34 of the mobile unit 10, i.e. of the basic module 40. The emptied transport carriage 50 can then be removed from the working range of the supply system.

In this embodiment it is not necessary to latch the transport carriage 50 to the mobile platform 34. It is sufficient to actuate the braking devices 54 of the transport carriage 50 and 33 of the mobile platform 34.

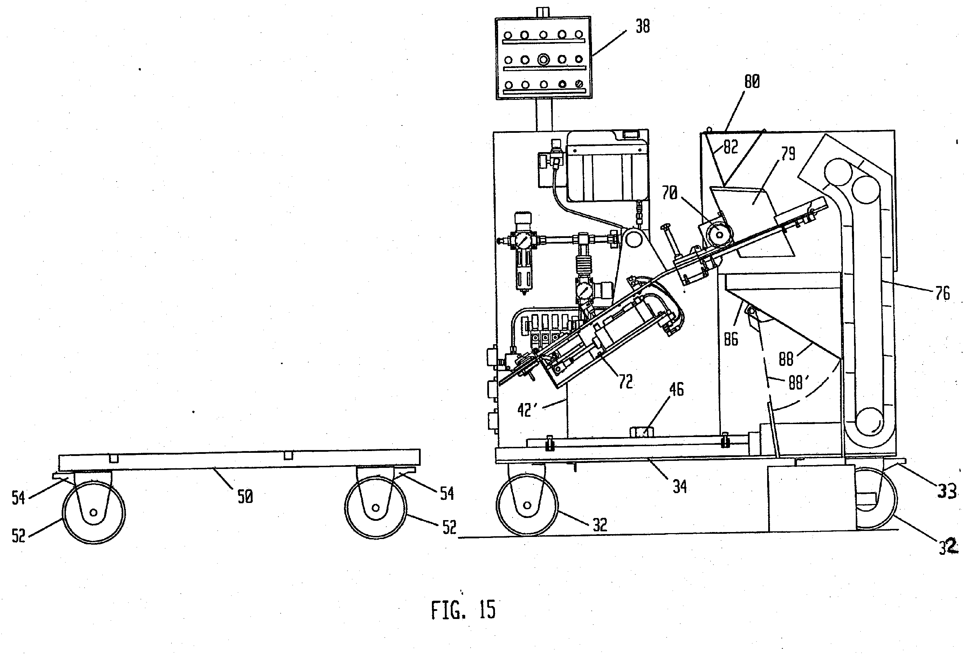

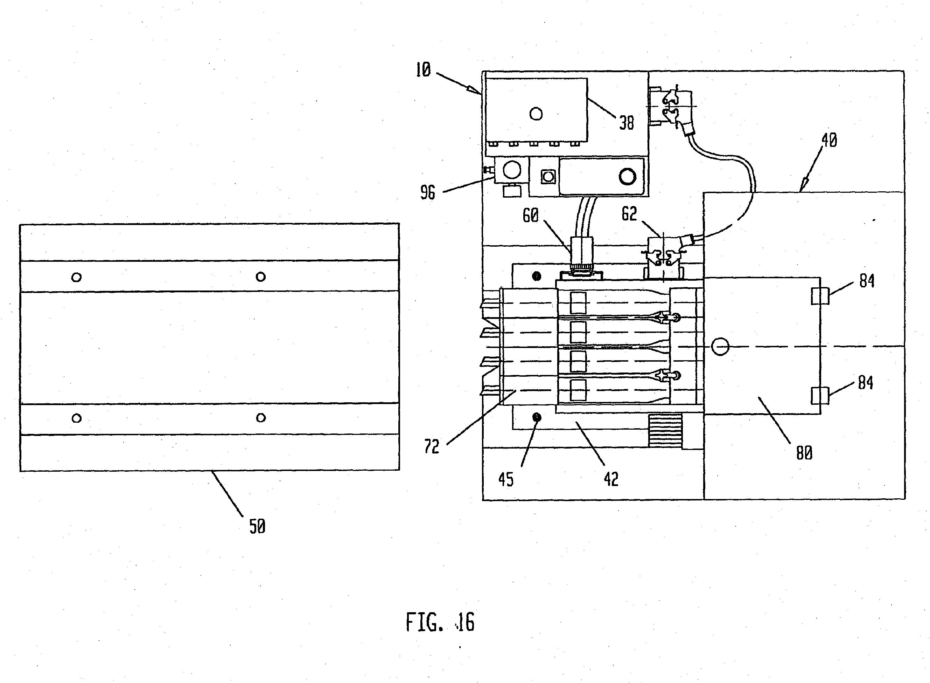

Figs. 15 and 16 show the position after the lowering of the exchangeable module 42' onto the platform 34 of the mobile unit, and after the insertion of the multiple pneumatic plug 60 and of the multiple electrical plug 62.

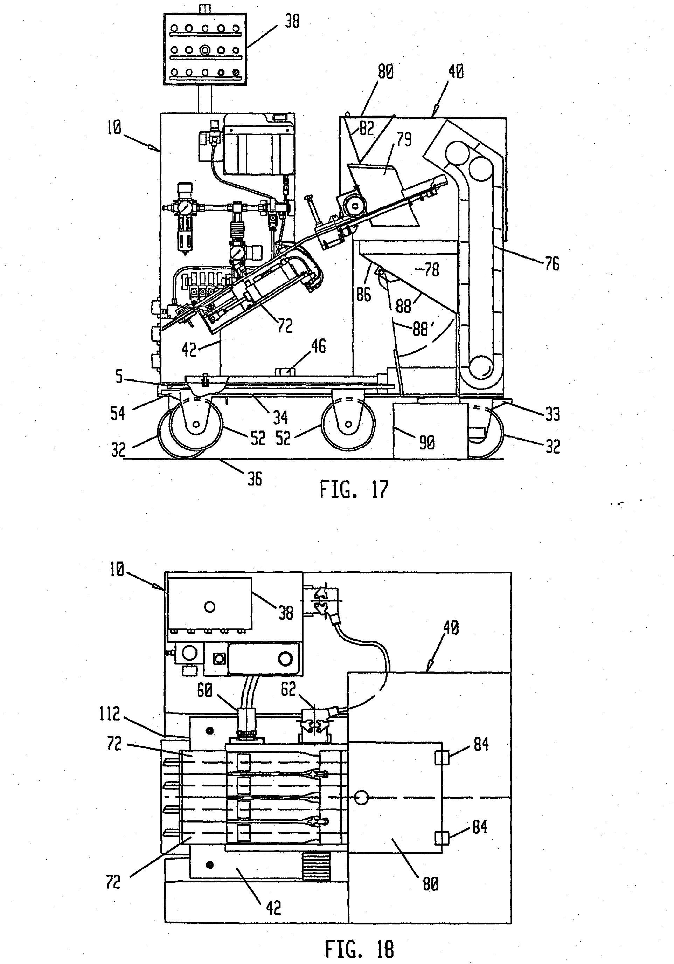

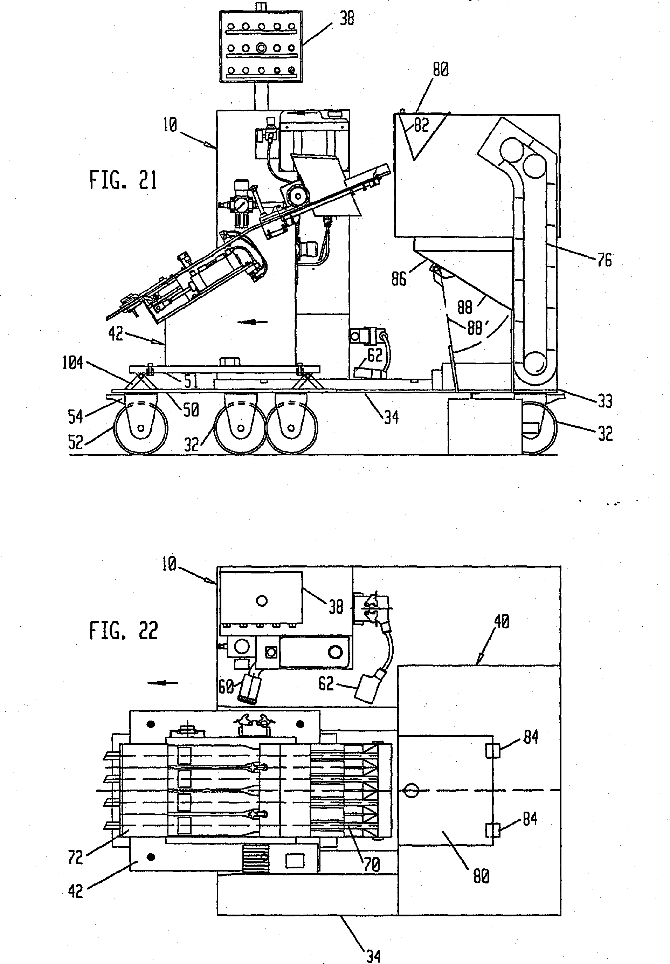

The Figs. 17 to 24 show a third variant, in which the mounting platform 34 is provided with a rectangular cutout or receiving bay 112, into which the exchangeable module mounted on a separate transport carriage 50 is pushed. The chassis 53 of the separate transport carriage 50 is provided with a retractable and extendible platform 51 (see Figs. 18, 20), so that the latter can be lowered from an elevated transport position to the level of the mounting platform 34 of the basic module 40. In this arrangement a horizontal fixing is effected, as in the embodiment of Figs. 11 to 16, i.e. preferably via conical centering spigots 35 and bores 45, and the securing in the vertical direction can also take place here via an attachment screw 46 or via a quick acting closure.

The lifting and lowering of the platform 51 of the exchangeable module can take place here in different ways and means. In the illustrated arrangement the platform 51 is connected via scissors links 104 with the chassis 53 of the transport carriage 50, so that on actuation of the scissors links, for example by means of a spindle, the limbs of the scissors links can adopt different angles to one another, whereby different heights of the platform 51 can be achieved, in similar manner to a scissors type jack.

Alternatively, the wheels themselves can be adjusted in position relative to the chassis 53, which is, however, not shown here.

In this embodiment the exchangeable module remains with the transport carriage 50, so that a relatively simple design of the transport carriage is possible, despite the existing possibility of lifting and lowering the platform 51. It is also conceivable to modify the embodiment of Figs. 17 to 24 in such a way that no lifting or lowering of the exchangeable module is effected, but rather only a mechanical latching of the transport carriage with the mobile platform 34 of the basic module 40 after it has been moved into the receiving bay 112.

The functional sequence in this embodiment is as follows:

As shown in Figs. 17 and 18, the transport carriage 50 with the sorting and transport devices 70 and 72 to be exchanged, is located in the position on the basic module 40 defined by the centering pins 35. In addition, the transport carriage 50 is secured by means of the screw connection or the quick clamping device 46.

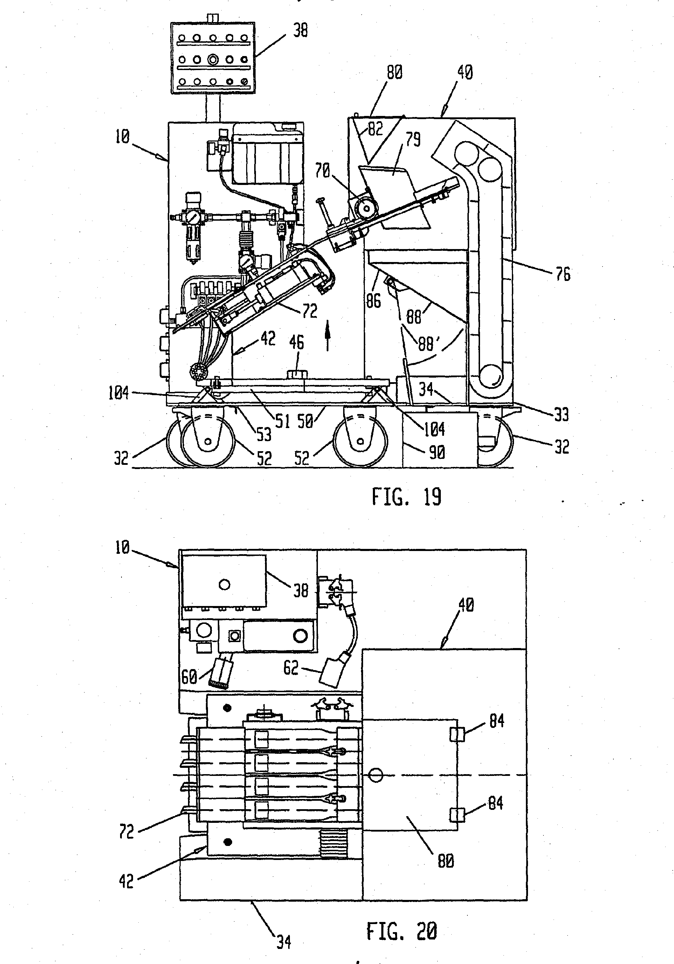

In the Figs. 19 and 20, the transport carriage 50 is raised after releasing the screw connection or the quick clamping device by railing of the platform 51, until the transport carriage is no longer fixed via the centering spigots 35.

As shown in Figs. 21 and 22, the transport carriage can now be moved out of the basic module.

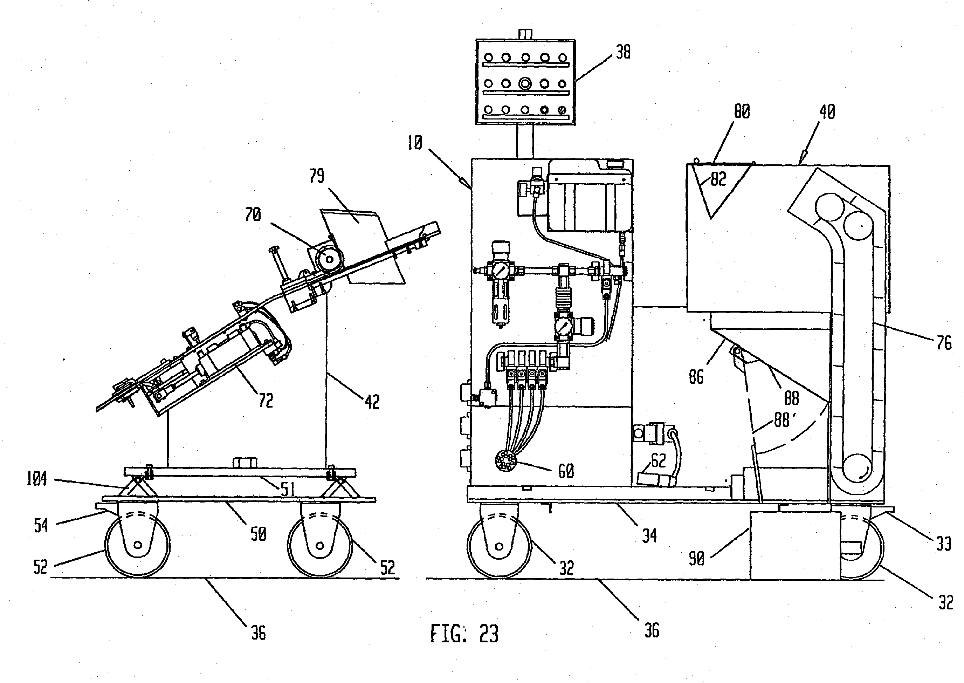

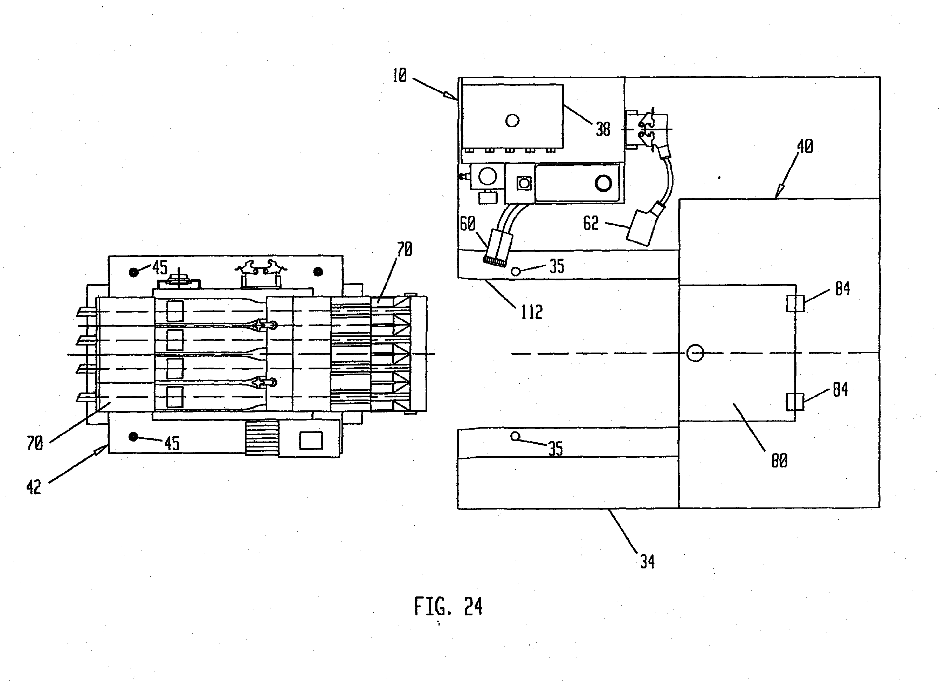

The Figs. 23 and 24 show that the transport carriage with the last used sorting and transport devices is separated from the basic module and is being replaced by another transport carriage 50, with the sorting and transport devices which are to be used next.

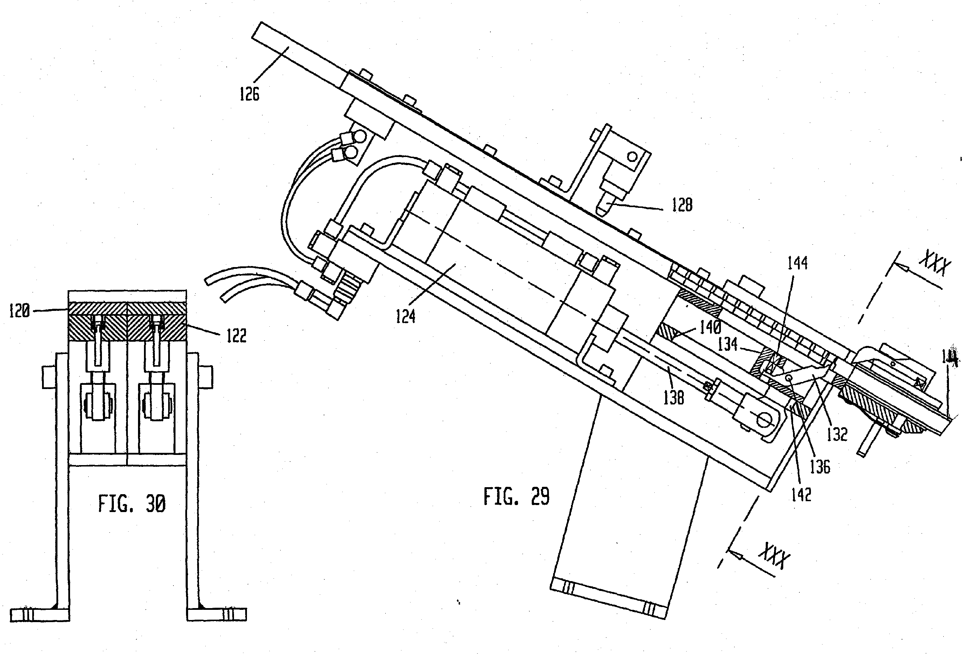

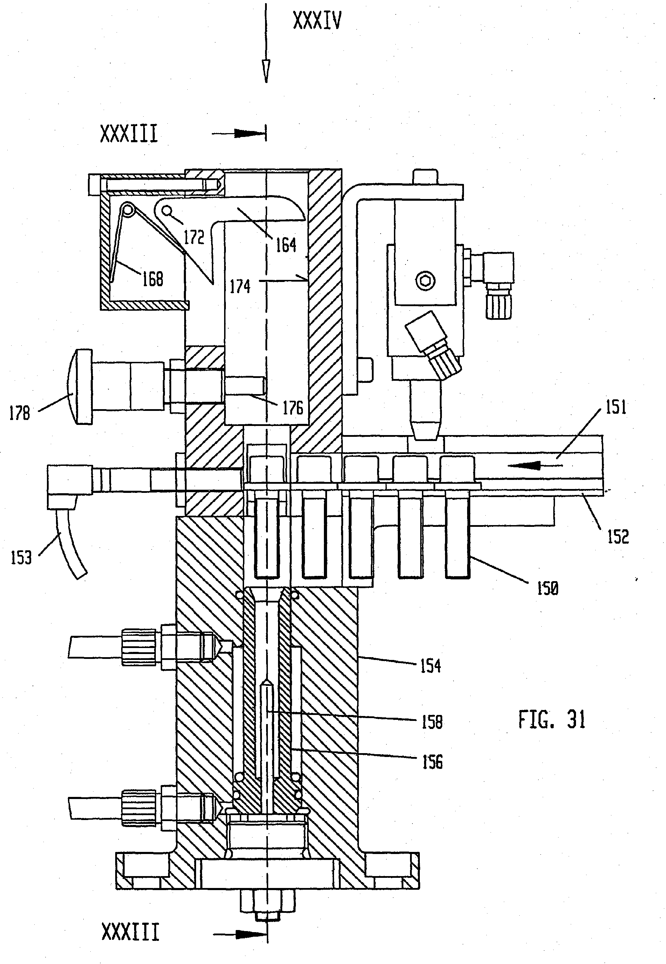

As already indicated previously, the Figs. 25 and 26 show a variant of the modular supply system having here two tracks for the blowing feeding of bolt elements and two tracks for the pushing feeding of nut elements. The connection to the basic module 40 also preferably takes place here via a multi-plug 60 for the pneumatic system and via a multi-plug 62 for the electrical system. The design of the transport device 72 for the pushing feeding is shown in Figs. 29 and 30, while the transport device 72" for the blowing embodiment is shown in the Figs. 31 to 34.

The Figs. 27 and 28 show that the exchangeable module, even when the basic module is designed to supply four lines 14 or tracks, can be equipped with a smaller number of transport devices, in this case with two tracks for the blowing feeding of bolts by means of two transport devices 72", which correspond to the transport devices 72" of Fig. 26.

Another difference in the embodiment of Figs. 27 and 28 is the use of a different forwarding device 76, here for example of a vibratory feeder 76' for the delivery of the elements to the sorting device 70 associated with the transport devices. Such vibratory feeders are known per se and are available from the company Profil. They are therefore not specially described here.

In the embodiments of Figs. 25 and 26 or 27 and 28, the precise nature of the hand-over of the exchangeable module to the basic module is not shown. This can, however, take place as desired, for example in accordance with one of the previously described variants, with the use of centering spigots 35 being shown here in accordance with the embodiment of Figs. 11 to 16, i.e. a lifting device 110 comes into use here.

In the transport device for the pushing feeding of the nut elements in accordance with Figs. 29 and 30, two tracks 120, 122 are arranged alongside one another, as can be seen from Fig. 30, and provided with respective pneumatic cylinders 124.

The nut elements 130 coming from the sorting device 70 (not shown in Fig. 29) are filled into a guide passage 126 matched to the nut elements and slide to the right under gravity (see Fig. 29). A detector 128 checks whether sufficient nuts are provided in the guide channel 126. If no nuts can be found here, then this is an indication that the supply of nuts has come to an end, which leads via the control in the control cabinet to the supply system and also to the user being switched off, or at least a warning is given to the operator, for example via an indicator 38, or as an acoustic signal or as a blinking signal, that the supply needs to be topped up.

In order to be able to transport the nut elements 130 on further into the line 14 and to the user, a pivotally arranged finger 132 engages into the bore of a nut element 130. The finger 132 is pivotally mounted in a carriage 134 about the axis 136. The carriage is pushed to the right by the piston rod 138 of the pneumatic cylinder 124, and indeed over a stroke which includes a plurality of elements, and is limited by the abutments . 140 and 142. The cylinder 124 and the pneumatic supply 96 determine the pressure which the pivotable finger 132 exerts onto the nut elements under the control of the control cabinet 38. The line 14 is full with such nut elements. They are taken over one at a time by the setting head 20 or 20" in the press, whereby the finger 132 is advanced through a path length, which corresponds to the maximum diameter of the element. If the carriage reaches the abutment 142, then this is, for example, sensed by a pressure increase and leads to a changeover of the pneumatic cylinder 124, whereby the finger element 132 rotates about the axis of rotation 136 opposite to the force of the spring 144. The carriage 134 can then be retracted up to the abutment 140, whereby the pneumatic cylinder is changed over once again. As a result of the action of the spring, the tip of the finger element 132 engages into the bore of a nut element anew, and further nut elements are shifted to the right. The two tracks 120, 122 arranged alongside one another operate fully independently of one another.

The transport device 72" for the blowing transport is shown in Figs. 31 to 34 and is normally used with bolt elements 150.

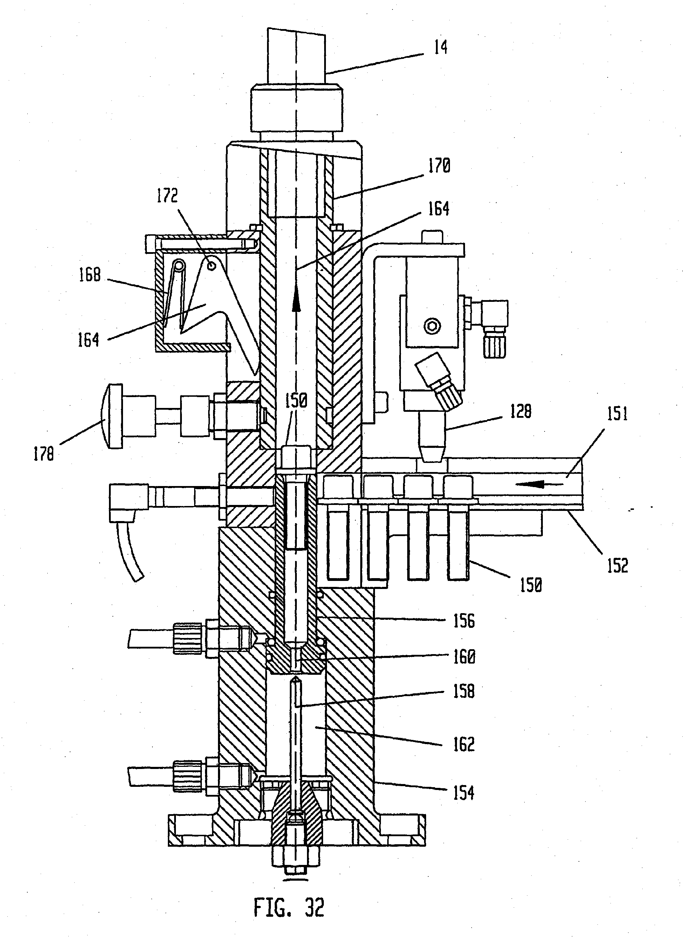

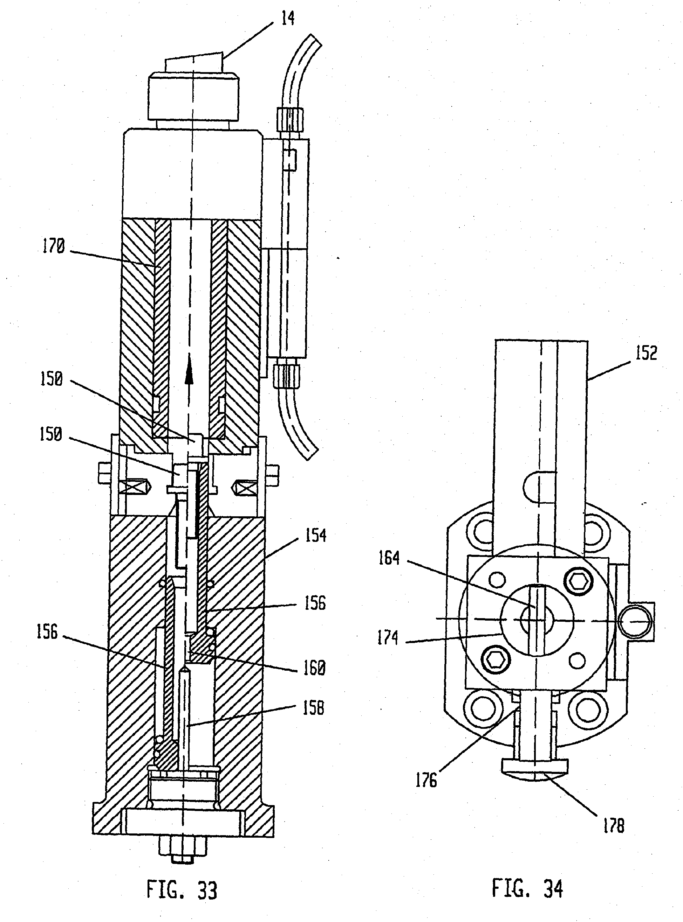

As is evident in Fig. 31, the bolt elements 150 arrive in the direction of the arrow 151 from the corresponding sorting device 70" in the desired transport position and are correspondingly guided by a guide channel 152. In the blowing head 154 of the transport device there is only space for one bolt element 150. That is to say the working head 154 is matched to the dimensions of the bolt elements 150. When the front bolt element 150 has reached the position of Fig. 31, which is determined by the detector 153, then the sleeve 156, which is displaceably provided in the blowing head 154 is raised by pneumatic pressure, so that the shaft part of the bolt element 150 comes to lie in the sleeve. In the uppermost position of the displaceable sleeve 156, which is shown in the Figs. 32 and 33, a guide needle 158 leaves the sleeve 156, whereby a through-flow passage 160 opens. The air pressure prevailing in the pressure chamber 162 can now flow into the sleeve 156 and blows, as in an airgun, the bolt element in the direction of the arrow 164 into the attached line 14.

A sensor 128 also serves here for the determination of whether sufficient bolt elements 150 are provided. In this embodiment a pivotally arranged finger 164 projects under the action of the spring 168 into the upper part of the blowing head 154 and prevents the blowing of a bolt element if a line 14 is not present. On inserting the end of the line 170; the finger 164 is pivoted against the force of a spring by the pin 172 out of the bore 174. A spring-loaded index pin 176 engages into a groove at the end 170 of the line and latches in this manner the connection between the blowing head 154 and the line end 154. For the insertion of the line end 170 and for the release of the connection, it is necessary to draw the head 178 of the index pin outwardly.

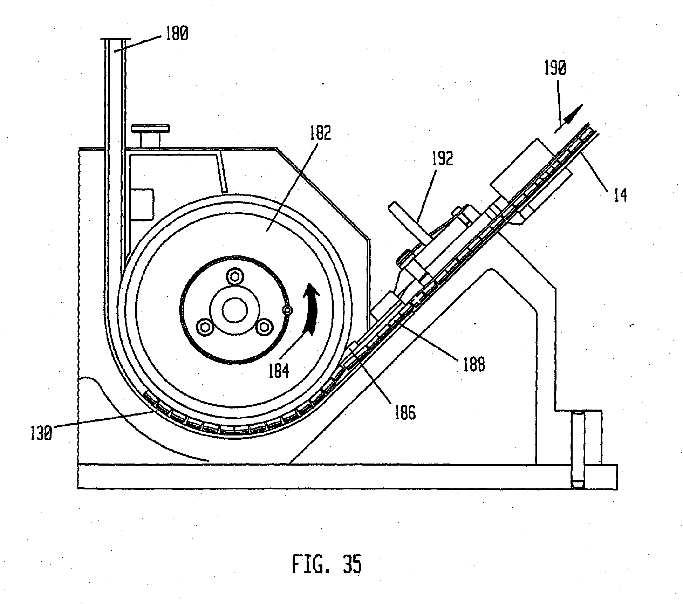

Finally, Fig. 35 shows an alternative transport unit, which is here designed as a magnetic transport device.

The elements which are here likewise shown as nut elements come from the associated sorting units 70 or 70' via the correspondingly designed guide channel 180 into the lower peripheral region of a rotating magnetic wheel 182, which attracts the nut elements and moves them along in the direction of rotation 184 of the magnet wheel 182 until they reach a deflector 186: At the deflector the nut elements enter into a further guide passage 188 and from there into a line 14 leading to the user. That is to say, the nut elements 130 are transported further in the arrow direction 190 and in the line 14. The device 192 represents a quick connection coupling for the line 14.

As mentioned earlier, the sorting devices and the transport devices of the present invention will typically be formed as units, i.e. modules, which can be connected together in any desired number and/or design to form the exchangeable module. As also described, the exchangeable module will be connected pneumatically and electrically to the basic module via multi-plugs 60 and 62. It is advantageous if the individual sorting and transport units are equipped with pneumatic lines and electrical leads, which can themselves be connected to the sockets for the multi-plugs 60 and 62 via respective quick connections. This facilitates the rapid assembly of an exchangeable module from a plurality of sorting and transport units. If the basic module end of the multi-plug connector is a socket rather than a plug, then the plug will be provided on the exchangeable module and the individual pneumatic and electrical leads will be connected to respective "pins" of the plug on the exchangeable module 42 via respective quick couplings. The multi-plugs 60 and 62 have a sufficient number of individual connection locations, i.e. "pins", that they can supply the required number of hydraulic and electrical lines for the maximum number of sorting and transport units which can be used with the basic module. Since each "pin" of the pneumatic multi-plug 60 is connected to a respective pneumatic line of one of the associated sorting and transport units, the electronic programming of the control cabinet can be such that the appropriate pressure is applied to each respective pin, and.thus to the associate lead, via the associated solenoid operated pressure control valve.

## Claims

1. Supply system (10) for the delivery of elements (130, 150) to one or more users (12) comprising a forwarding device (or feeder) (76, 76', 76") which supplies the elements from a stored quantity (78) of the elements to a sorting device (70, 70'), which only permits elements having a predetermined position to pass and with a transport device (72, 72'), which transports the positionally correctly sorted elements (130, 150) to the user (12), **characterized in that** the forwarding device (76, 76', 76") forms part of a basic module (40) , **in that** a plurality of interchangeable modules is provided each comprising a sorting device (70, 70') and an associated transport device (72, 72'), said plurality of interchangeable modules being connectable to said basic module (40) with said sorting devices disposed alongside one another and positioned to receive elements from said forwarding device (76, 76', 76").

2. Supply system in accordance with claim 1, **characterized in that** baffle elements are provided which ensure that elements which are not passed by the sorting devices (70, 70') fall back into a supply chamber (78) associated with said forwarding device (76, 76', 76").

3. Supply in accordance with claim 1 or claim 2, **characterized in that** said transport devices (72,72') are connected via a hose or a rail to said user (12).

4. Supply system in accordance with any one of the preceding claims,
**characterized in that** the basic module (40) is provided with one or more supply chambers (78).

5. Supply system in accordance with claim 4, **characterized in that** a plurality of supply chambers are provided with said supply chambers being separated so that elements (130, 150) filled true-to-type into one supply chamber cannot enter a neighboring supply chamber and mix with other elements **in that** neighboring supply chamber.

6. Supply system in accordance with claim 5, **characterized in that** the forwarding device (76, 76', 76") either comprises one conveyor adapted to simultaneously convey elements (130, 150) from all supply chambers of the basic module (40) or as a respective forwarding unit for each supply chamber.

7. Supply system in accordance with one of the preceding claims, **characterized in that** the basic module (40) has, in addition to the forwarding device from the supply chamber or supply chambers, a mobile installation platform (34).

8. Supply system in accordance with claim 7, **characterized in that** functional devices which are designed independently of the elements, such as for example an electrical control cupboard (38) with a display device, a pneumatic supply (96), an oiling device (98) and/or noise and/or safety protection devices are associated with the basic module (40) and are secured directly or indirectly to the mobile mounting platform (34).

9. Supply system in accordance with one of the preceding claims, **characterized in that** a pneumatic supply (96) is provided, which includes at least some of the following components: a filter, an oiler, a water separator, valves, power units and also one or more termination devices and optionally a compressor unit.

10. Supply system in accordance with any one of the preceding claims, **characterized in that** an oiling device (98) is provided for the oiling of the elements (130, 150), and also of the mechanical parts which enter into contact with the latter, and is associated with the basic module (40).

11. Supply system in accordance with one of the preceding claims, **characterized in that** said sorting devices (70, 70') consist of a plurality of like sorting devices or different sorting units.

12. Supply system in accordance with claim 10, **characterized in that** the transport device (72, 72') has a plurality of different sorting units to which the correspondingly different elements can be supplied either from a mixture present in a supply chamber (78) or separately, true-to-type from different supply chambers.

13. Supply system in accordance with one of the preceding claims, **characterized in that** the basic module (40) includes one or more emptying openings, which lies or lie at the lowest point of the supply chamber (78), with the or each supply chamber enabling, via walls which converge to the said emptying opening or openings, a problem-free emptying of the entire supply quantity through the or each emptying opening, and/or **in that** the or each supply chamber (78) enables a problem-free visual and optical check of the emptied state.

14. Supply system in accordance with one or more of the preceding claims, **characterized in that** the interchangeable module (42, 42', 42") or the interchangeable modules (42, 42', 42") is or are connect-42") or the interchangeable modules (42, 42', 42") is or are connectable via respective quick change couplings (45, 46, 60, 62) to the basic module (40) or to functional units (35) mounted on its mounting platform (34), and indeed in the sense of a rapid mechanical connection of the interchangeable module (42, 42', 42") to the basic module (40), a rapid electrical connection to the control cabinet (38) and a rapid pneumatic connection to the pneumatic system and also, optionally, a rapid connection to the oiling system (98).

15. Supply system in accordance with one of the preceding claims, **characterized in that** a transport carriage (50) is provided for the interchangeable module (42, 42', 42") and preferably has space for two or more interchangeable modules (42, 42', 42").

16. Supply systems in accordance with claim 15, **characterized in that** both the platform (34) of the basic module (40) and also the transport carriage (50) have their own rail means (44, 48), whereby an interchangeable module (42, 42', 42") located on the rail means (44) of the basic module (40) can be shifted onto the rail means (48) of the transport carriage (50), and an exchangeable module (42, 42', 42") located on the rail means (48) of the transport carriage can be shifted onto the rail means (44) of the basic module, wherein a latching device (46) is preferably provided in order to non-displaceably latch the interchangeable module (42, 42', 42") located on the rail means of the basic module (40) with the basic module (40).

17. Supply system in accordance with claim 16, **characterized in that** the transport carriage (50) is designed to receive at least two inter-' changeable modules which each have space on the rail means (48) and **in that** the rail means (48) are either located on a rotary table of the transport carriage or the transport carriage can be aligned by means of corresponding wheels (52), with the basic module at two positions displaced by 180°.

18. Supply system in accordance with one of the preceding claims, **characterized by** a lifting means (100), whereby an interchangeable module (42, 42', 42") located on the basic module (40) can be lifted from the basic module (40) and placed onto the transport carriage (50), and an interchangeable module (42, 42', 42") located on the transport carriage (50) can be lifted from the latter and placed onto the basic module (40); with an alignment device (35, 45) or a centering device preferably being provided on at least the basic module (40), and preferably also on the transport carriage (50), in order to non-displaceably place the interchangeable module (42', 42', 42") on the basic module (40) or the transport carriage (50) respectively during its placement on the basic module (40) or onto the transport carriage (50), whereby a latching device (46) is optionally also providable.

19. Supply system in accordance with one of the preceding claims, **characterized in that** the basic module (40) has a receiving bay (112) for the interchangeable module (42, 42', 42"); **in that** the transport carriage (50) can be moved at least partly into the receiving bay (112), and the basic module (40) and/or the transport carriage (50) is equipped with a device (104) for the lifting or placement of the interchangeable module (42, 42', 42") from and onto the basic module (40), and optionally **in that** a guide means (35) is provided on the basic module (40), preferably in the marginal region of the receiving bay (112) in order to center or align the interchangeable module (42, 42', 42") during its placement.

20. Supply system in accordance with claim 19, **characterized in that** the transport carriage (50) forms a unit together with the interchangeable module (42, 42', 42") and can be secured with this module on the basic module (40), with the wheels (52) of the transport carriage (50) being preferably raisable and lowerable for the placement and lifting of the interchangeable module (42, 42', 42").

21. Supply system in accordance with claim 1, **characterized in that** a. single supply chamber (78) is provided, and **in that** the exchangeable module comprises a plurality of sorting units (70, 70') and transport units (72, 72'), which are adapted to feed the same type and size of element supplied by the forwarding device (76, 76', 76") from the single supply chamber.

22. Supply system in accordance with one of the preceding claims, **characterized in that** the sorting devices and transport devices of an exchangeable module are themselves modules adapted for rapid connection together and/or to a platform (51) to form the exchangeable module (42).

## Patentansprüche

1. Versorgungssystem (10) für die Lieferung von Elementen (130, 150) an einen oder mehrere Anwender (12) mit einer Beförderungsvorrichtung (oder Zufuhrvorrichtung) (76, 76', 76"), die die Elemente von einer gespeicherten Menge (78) der Elemente an eine Sortiervorrichtung (70, 70') liefert, die nur einen Durchgang von Elementen mit einer vorbestimmten Position zulässt, und mit einer Transportvorrichtung (72, 72'), die die hinsichtlich der Position korrekt sortierten Elemente (130, 150) an den Anwender (12) transportiert,
**dadurch gekennzeichnet,**
**dass** die Beförderungsvorrichtung (76, 76', 76") einen Teil eines Grundmoduls (40) bildet, und dass eine Vielzahl auswechselbarer Module vorgesehen ist, von denen jedes eine Sortiervorrichtung (70, 70') und eine zugeordnete Transportvorrichtung (72, 72') umfasst, wobei die Vielzahl auswechselbarer Module mit dem Grundmodul (40) so verbindbar ist, dass die Sortiervorrichtungen Seite an Seite aneinander angeordnet und so positioniert sind, um Elemente von der Beförderungsvorrichtung (76, 76', 76") aufzunehmen.

2. Versorgungssystem nach Anspruch 1,
**dadurch gekennzeichnet,**
**dass** Ablenkelemente vorgesehen sind, die sicherstellen, dass Elemente, die von den Sortiervorrichtungen (70, 70') nicht durchgelassen werden, zurück in eine Versorgungskammer (78) zurückfallen, die der Beförderungsvorrichtung (76, 76', 76") zugeordnet ist.

3. Versorgungssystem nach einem der Ansprüche 1 oder 2,
**dadurch gekennzeichnet ,**
**dass** die Transportvorrichtungen (72, 72') über einen Schlauch oder eine Schiene mit dem Anwender (12) verbunden sind.

4. Versorgungssystem nach einem der vorhergehenden Ansprüche,
**dadurch gekennzeichnet ,**
**dass** das Grundmodul (40) mit einer oder mehreren Versorgungskammern (78) versehen ist.

5. Versorgungssystem nach Anspruch 4,
**dadurch gekennzeichnet ,**
**dass** eine Vielzahl von Versorgungskammern vorgesehen ist, wobei die Versorgungskammern getrennt sind, so dass Elemente (130, 150), die typgetreu in eine Versorgungskammer gefüllt sind, nicht in eine benachbarte Versorgungskammer gelangen und sich mit anderen Elementen in dieser benachbarten Versorgungskammer mischen können.

6. Versorgungssystem nach Anspruch 5,
**dadurch gekennzeichnet ,**
**dass** die Beförderungsvorrichtung (76, 76', 76") entweder eine Fördereinrichtung umfasst, die derart ausgebildet ist, um simultan Elemente (130, 150) von allen Versorgungskammern des Grundmoduls (40) zu fördern, oder als eine jeweilige Beförderungseinheit für jede Versorgungskammer vorgesehen ist.

7. Versorgungssystem nach einem der vorhergehenden Ansprüche,
**dadurch gekennzeichnet ,**
**dass** das Grundmodul (40) zusätzlich zu der Beförderungsvorrichtung von der Versorgungskammer oder den Versorgungskammern eine mobile Montageplattform (34) aufweist.

8. Versorgungssystem nach Anspruch 7,
**dadurch gekennzeichnet ,**
**dass** funktionelle Vorrichtungen, die unabhängig von den Elementen ausgebildet sind, wie beispielsweise ein elektrischer Steuerschrank (38) mit einer Displayvorrichtung, einer Druckluftversorgung (96), einer Ölvorrichtung (98) und/oder Geräusch- und/oder Sicherheitsschutzvorrichtungen, dem Grundmodul (40) zugeordnet und direkt oder indirekt an der mobilen Montageplattform (34) befestigt sind.

9. Versorgungssystem nach einem der vorhergehenden Ansprüche,
**dadurch gekennzeichnet ,**
**dass** eine Druckluftversorgung (96) vorgesehen ist, die zumindest einige der folgenden Komponenten umfasst: einen Filter, eine Öleinrichtung, einen Wasserabscheider, Ventile, Leistungseinheiten und auch eine oder mehrere Beendigungsvorrichtungen und optional eine Kompressoreinheit.

10. Versorgungssystem nach einem der vorhergehenden Ansprüche,
**dadurch gekennzeichnet,**
**dass** eine Ölvorrichtung (98) zum Ölen der Elemente (130, 150) und auch der mechanischen Teile vorgesehen ist, die in Kontakt mit dieser gelangen, und dem Grundmodul (40) zugeordnet ist.

11. Versorgungssystem nach einem der vorhergehenden Ansprüche,
**dadurch gekennzeichnet ,**
**dass** die Sortiervorrichtungen (70, 70') aus einer Vielzahl gleicher Sortiervorrichtungen oder verschiedenen Sortiereinheiten bestehen.

12. Versorgungssystem nach Anspruch 10,
**dadurch gekennzeichnet ,**
**dass** die Transportvorrichtung (72, 72') eine Vielzahl verschiedener Sortiereinheiten aufweist, an die die entsprechenden verschiedenen Elemente entweder aus einer Mischung, die in einer Versorgungskammer (78) vorhanden ist, oder separat typgerecht von verschiedenen Versorgungskammern geliefert werden können.

13. Versorgungssystem nach einem der vorhergehenden Ansprüche,
**dadurch gekennzeichnet ,**
**dass** das Grundmodul (40) eine oder mehrere Entleeröffnungen, die an dem untersten Punkt der Versorgungskammer (78) liegt bzw. liegen, mit der bzw. jeder Versorgungskammer umfasst, die über Wände, die zu der bzw. den Entleeröffnungen hin konvergieren, ein problemloses Leeren der gesamten Versorgungsmenge durch die oder jede Entleeröffnung ermöglichen und/oder dass die oder jede Versorgungskammer (78) eine problemlose visuelle und optische Prüfung des geleerten Zustandes ermöglicht.

14. Versorgungssystem nach einem der vorhergehenden Ansprüche,
**dadurch gekennzeichnet ,**
**dass** das auswechselbare Modul (42, 42', 42") oder die auswechselbaren Module (42, 42', 42") über jeweilige Schnellwechselkupplungen (45, 46, 60, 62) mit dem Grundmodul (40) oder mit funktionellen Einheiten (35), die an seiner Montageplattform (34) befestigt sind, und zwar in dem Sinne einer schnellen mechanischen Verbindung des auswechselbaren Moduls (42, 42', 42") mit dem Grundmodul (40), einer schnellen elektrischen Verbindung mit der Steuerkabine (38) und einer schnellen pneumatischen Verbindung mit dem Druckluftsystem und auch optional einer schnellen Verbindung mit dem Ölsystem (98) verbindbar ist bzw. sind.

15. Versorgungssystem nach einem der vorhergehenden Ansprüche,
**dadurch gekennzeichnet,**
**dass** ein Transportwagen (50) für das auswechselbare Modul (42, 42', 42") vorgesehen ist, der bevorzugt Raum für zwei oder mehr auswechselbare Module (42, 42', 42") umfasst.

16. Versorgungssystem nach Anspruch 15,
**dadurch gekennzeichnet ,**
**dass** sowohl die Plattform (34) des Grundmoduls (40) als auch der Transportwagen (50) ihr eigenes Schienenmittel (44, 48) besitzen, wodurch ein auswechselbares Modul (42, 42', 42"), das an dem Schienenmittel (44) des Grundmoduls (40) angeordnet ist, auf dem Schienenmittel (48) des Transportwagens (50) verschoben werden kann, und ein auswechselbares Modul (42, 42', 42"), das an dem Schienenmittel (48) des Transportwagens angeordnet ist, auf dem Schienenmittel (44) des Grundmoduls verschoben werden kann, wobei bevorzugt eine Feststellvorrichtung (46) vorgesehen ist, mit der das auswechselbare Modul (42, 42', 42"), das an dem Schienenmittel des Grundmoduls (40) angeordnet ist, mit dem Grundmodul (40) nicht verschiebbar festgestellt werden kann.

17. Versorgungssystem nach Anspruch 16,
**dadurch gekennzeichnet ,**
**dass** der Transportwagen (50) derart ausgebildet ist, dass er zumindest zwei auswechselbare Module aufnimmt, die jeweils Raum an dem Schienenmittel (48) besitzen, und dass das Schienenmittel (48) entweder an einem Drehtisch des Transportwagens angeordnet ist oder der Transportwagen durch entsprechende Räder 52 mit dem Grundmodul an zwei um 180° versetzten Positionen ausgerichtet werden kann.

18. Versorgungssystem nach einem der vorhergehenden Ansprüche,
**gekennzeichnet durch**
ein Hebemittel (100), wobei ein auswechselbares Modul (42, 42', 42"), das an dem Grundmodul (40) angeordnet ist, von dem Grundmodul (40) angehoben und auf dem Transportwagen (50) angeordnet werden kann, und ein auswechselbares Modul (42, 42', 42"), das an dem Transportwagen (50) angeordnet ist, von diesem angehoben und auf dem Grundmodul (40) angeordnet werden kann, wobei bevorzugt eine Ausrichtvorrichtung (35, 45) oder eine Zentriervorrichtung an zumindest dem Grundmodul (40) und bevorzugt auch an dem Transportwagen (50) vorgesehen ist, um das auswechselbare Modul (42, 42', 42") an dem Grundmodul (40) bzw. dem Transportwagen (50) während seiner Anordnung an dem Grundmodul (40) oder auf dem Transportwagen (50) nicht verstellbar anzuordnen, wobei auch optional eine Feststellvorrichtung (46) vorgesehen ist.

19. Versorgungssystem nach einem der vorhergehenden Ansprüche,
**dadurch gekennzeichnet,**
**dass** das Grundmodul (40) eine Aufnahmebucht (112) für das auswechselbare Modul (42, 42', 42") besitzt, dass der Transportwagen (50) zumindest teilweise in die Aufnahmebucht (112) bewegt werden kann, und das Grundmodul (40) und/oder der Transportwagen (50) mit einer Vorrichtung (104) zum Anheben des auswechselbaren Moduls (42, 42', 42") von dem Grundmodul (40) oder zum Anordnen des auswechselbaren Moduls (42, 42', 42") an dem Grundmodul (40) ausgestattet ist, und dass optional ein Führungsmittel (35) an dem Grundmodul (40) bevorzugt in einem Randgebiet der Aufnahmebucht (112) vorgesehen ist, um das auswechselbare Modul (42, 42', 42") während seiner Anordnung zu zentrieren oder auszurichten.

20. Versorgungssystem nach Anspruch 19,
**dadurch gekennzeichnet,**
**dass** der Transportwagen (50) zusammen mit dem auswechselbaren Modul (42, 42', 42") eine Einheit bilden und mit diesem Modul an dem Grundmodul (40) angebracht werden kann, wobei die Räder (52) des Transportwagens (50) bevorzugt angehoben und abgesenkt werden können, um das auswechselbare Modul (42, 42', 42") anzuordnen und anzuheben.

21. Versorgungssystem nach Anspruch 1,
**dadurch gekennzeichnet,**
**dass** eine einzelne Versorgungskammer (78) vorgesehen ist, und dass das auswechselbare Modul eine Vielzahl von Sortiereinheiten (70, 70') und Transporteinheiten (72, 72') umfasst, die derart ausgebildet sind, um denselben Typ und dieselbe Größe von Element, die von der Beförderungsvorrichtung (76, 76', 76") geliefert wird, von der einzelnen Versorgungskammer zuzuführen.

22. Versorgungssystem nach einem der vorhergehenden Ansprüche,
**dadurch gekennzeichnet,**
**dass** die Sortiervorrichtungen und Transportvorrichtungen eines auswechselbaren Moduls selbst Module sind, die zur schnellen Verbindung aneinander und/ oder mit einer Plattform (51) ausgebildet sind, um das auswechselbare Modul (42) zu bilden.

## Revendications

1. Système d'alimentation (10) pour la distribution d'éléments (130, 150) à un ou plusieurs utilisateurs (12), comportant un dispositif d'avance (ou distributeur) (76, 76', 76") qui amène les éléments, depuis une quantité emmagasinée (78) des éléments à un dispositif de tri (70, 70") qui ne permet le passage que d'éléments ayant une position prédéterminée, et avec un dispositif de transport (72, 72') qui transporte jusqu'à l'utilisateur (12) les éléments triés comme en position correcte, **caractérisé en ce que** le dispositif d'avance (76, 76', 76") fait partie d'un module de base (40), **en ce qu'**une pluralité de modules interchangeables est prévue, comportant chacune un dispositif de tri (70, 70') et un dispositif de transport associé (72, 72'), ladite pluralité de modules interchangeables pouvant être raccordée audit module de base (40) de manière que lesdits dispositifs de tri soient disposés côte à côte et positionnés pour recevoir des éléments provenant dudit dispositif d'avance (76, 76', 76").

2. Système d'alimentation selon la revendication 1, **caractérisé en ce que** des éléments de déviation sont prévus, lesquels assurent que des éléments qui ne sont pas passés par les dispositifs de tri (70, 70') retombent dans une chambre d'alimentation (78) associée audit dispositif d'avance (76, 76', 76").

3. Alimentation selon la revendication 1 ou la revendication 2, **caractérisée en ce que** lesdits dispositifs de transport (72, 72') sont reliés par un tuyau ou un rail audit utilisateur (12).

4. Système d'alimentation selon l'une quelconque des revendications précédentes, **caractérisé en ce que** le module de base (40) est pourvu d'une ou plusieurs chambres d'alimentation (78).

5. Système d'alimentation selon la revendication 4, **caractérisé en ce que** plusieurs chambres d'alimentation sont prévues, lesdites chambres d'alimentation étant séparées de façon que des éléments (130, 150) conformes au type chargés dans une chambre d'alimentation ne puissent entrer dans une chambre d'alimentation voisine et se mélanger à d'autres éléments dans cette chambre d'alimentation voisine.

6. Système d'alimentation selon la revendication 5, **caractérisé en ce que** le dispositif d'avance (46, 76', 76") comprend soit un transporteur conçu pour transporter simultanément des éléments (130, 150) depuis toutes les chambres d'alimentation du module de base (40), soit une unité d'avance respective pour chaque chambre d'alimentation.

7. Système d'alimentation selon l'une des revendications précédentes, **caractérisé en ce que** le module de base (40) comporte, en plus du dispositif d'avance depuis la chambre d'alimentation ou les chambres d'alimentation, une plate-forme d'installation mobile (34).

8. Système d'alimentation selon la revendication 7, **caractérisé en ce que** des dispositifs fonctionnels, qui sont conçus indépendamment des éléments tels que, par exemple, une armoire de commande électronique (38) pourvue d'un dispositif d'affichage, une alimentation pneumatique (96), un dispositif graisseur (98) et/ou des dispositifs de protection contre le bruit et/ou de sécurité, sont associés au module de base (40) et sont fixés directement ou indirectement à la plate-forme de montage mobile (34).

9. Système d'alimentation selon l'une des revendications précédentes, **caractérisé en ce qu'**une alimentation pneumatique (96) est prévue, laquelle comprend au moins certains des constituants suivants : un filtre, un graisseur, un séparateur d'eau, des robinets, des unités d'alimentation en énergie et aussi un ou plusieurs dispositifs de terminaison et, facultativement, une unité à compresseur.

10. Système d'alimentation selon l'une quelconque des revendications précédentes, **caractérisé en ce qu'**un dispositif de graissage (98) est prévu pour le graissage des éléments (130, 150), et également des pièces mécaniques qui entrent en contact avec ces derniers, et est associé au module de base (40).

11. Système d'alimentation selon l'une des revendications précédentes, **caractérisé en ce que** lesdits dispositifs de tri (70, 70') sont constitués d'une pluralité de dispositifs de tri analogues ou d'unités de tri différentes.

12. Système d'alimentation selon la revendication 10, **caractérisé en ce que** le dispositif de transport (72, 72') comporte plusieurs unités de tri différentes auxquelles les éléments, qui diffèrent de façon correspondante, peuvent être amenés soit à partir d'un mélange présent dans une chambre d'alimentation (78), soit séparément, conformément au type à partir de différentes chambres d'alimentation.

13. Système d'alimentation selon l'une des revendications précédentes, **caractérisé en ce que** le module de base (40) comprend une ou plusieurs ouvertures de vidage, qui s'étend ou s'étendent au point le plus bas de la chambre (78) d'alimentation, la ou chaque chambre d'alimentation permettant, par l'intermédiaire de parois qui convergent vers ladite ouverture ou lesdites ouvertures de vidage, un vidage sans problème de la quantité entière d'alimentation à travers la ou chaque ouverture de vidage, et/ou **en ce que** la ou chaque chambre d'alimentation (78) permet une vérification visuelle et optique sans problème de l'état vidé.

14. Système d'alimentation selon une ou plusieurs des revendications précédentes, **caractérisé en ce que** le module interchangeable (42, 42', 42") ou les modules interchangeables (42, 42', 42") peut ou peuvent être reliés par l'intermédiaire d'accouplements respectifs à changement rapide (45, 46, 60, 62) au module de base (40) ou aux unités fonctionnelles (35) montées sur sa plate-forme de montage (34) et en fait dans le sens d'une connexion mécanique rapide du module interchangeable (42, 42', 42") au module de base (40), d'une connexion électrique rapide à l'armoire de commande (38) et d'une connexion pneumatique rapide au système pneumatique et, aussi, facultativement, d'une connexion rapide au système (98) de graissage.

15. Système d'alimentation selon l'une des revendications précédentes, **caractérisé en ce qu'**un chariot de transport (50) est prévu pour le module interchangeable (42, 42', 42") et présente avantageusement un espace pour deux ou plus de deux modules interchangeables (42, 42', 42" ).

16. Systèmes d'alimentation selon la revendication 15, **caractérisés en ce que** la plate-forme (34) du module de base (40) et, aussi, le chariot de transport (50) ont leurs propres moyens à rails (44, 48), grâce à quoi un module interchangeable (42, 42', 42") placé sur les moyens à rails (44) du module de base (40) peut être amené sur les moyens à rails (48) du chariot de transport (50), et un module interchangeable (42, 42', 42") placé sur les moyens à rails (48) du chariot de transport peut être amené sur les moyens à rails (44) du module de base, dans lequel un dispositif de verrouillage (46) est avantageusement prévu pour verrouiller de façon non déplaçable le module interchangeable (42, 42', 42") placé sur les moyens à rails du module de base (40) au module de base (40).

17. Système d'alimentation selon la revendication 16, **caractérisé en ce que** le chariot de transport (50) est conçu pour recevoir au moins deux modules interchangeables qui ont chacun un espace sur les moyens à rails (48), et **en ce que** soit les moyens à rails (48) sont placés sur un plateau tournant du chariot de transport, soit le chariot de transport peut être aligné au moyen de roues correspondantes (52), avec le module de base dans deux positions décalées de 180°.

18. Système d'alimentation selon l'une des revendications précédentes, **caractérisé par** un moyen élévateur (100), grâce à quoi un module interchangeable (42, 42', 42") situé sur le module de base (40) peut être élevé depuis le module de base (40) et placé sur le chariot de transport (50), et un module interchangeable (42, 42', 42") situé sur le chariot de transport (50) peut être élevé depuis ce dernier et placé sur le module de base (40), un dispositif d'alignement (35, 45) ou un dispositif de centrage étant avantageusement prévu sur au moins le module de base (40), et avantageusement, aussi, sur le chariot de transport (50) afin de placer de façon non déplaçable le module interchangeable (42, 42', 42") sur le module de base (40) ou le chariot de transport (50), respectivement pendant sa mise en place sur le module de base (40) ou sur le chariot de transport (50), un dispositif de verrouillage (46) pouvant également être prévu facultativement.

19. Système d'alimentation selon l'une des revendications précédentes, **caractérisé en ce que** le module de base (40) comporte une baie de réception (112) pour le module interchangeable (42, 42', 42") ; **en ce que** le chariot de transport (50) peut être déplacé au moins partiellement jusque dans la baie de réception (112), et le module de base (40) et/ou le chariot de transport (50) est équipé d'un dispositif (104) pour l'élévation ou la mise en place du module interchangeable (42, 42', 42") depuis et sur le module de base (40), et **en ce qu'**un moyen de guidage (35) est facultativement prévu sur le module de base (40), avantageusement dans la région marginale de la baie de réception (112) afin de centrer ou aligner le module interchangeable (42, 42', 42") pendant sa mise en place.

20. Système d'alimentation selon la revendication 19, **caractérisé en ce que** le chariot de transport (50) forme une unité avec le module interchangeable (42, 42', 42") et peut être fixé avec ce module sur le module de base (40), les roues (52) du chariot de transport (50) pouvant être avantageusement élevées et abaissées pour la mise en place et l'élévation du module interchangeable (42, 42', 42").

21. Système d'alimentation selon la revendication 1, **caractérisé en ce qu'**une chambre unique (78) d'alimentation est prévue, et **en ce que** le module échangeable comporte plusieurs unités de tri (70, 70') et unités de transport (72, 72'), lesquelles sont conçues pour amener le même type et la même dimension d'éléments fournis par le dispositif d'avance (76, 76', 76") depuis la chambre unique d'alimentation.

22. Système d'alimentation selon l'une des revendications précédentes, **caractérisé en ce que** les dispositifs de tri et les dispositifs de transport d'un module échangeable sont eux-mêmes des modules conçus pour une connexion rapide entre eux et/ou à une plate-forme (51) pour former le module échangeable (42).
